(19)

Europäisches Patentamt

European Patent Office

Office européen des brevets

(11) **EP 3 525 132 A1**

## (12) EUROPEAN PATENT APPLICATION

(43) Date of publication:
**14.08.2019 Bulletin 2019/33**

(51) Int Cl.:
**G06K 9/00** (2006.01)          **G06K 9/32** (2006.01)
**G06K 9/46** (2006.01)          **G06T 9/20** (2006.01)

(21) Application number: **18167695.8**

(22) Date of filing: **17.04.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.02.2018 IN 201821005454**

(71) Applicant: **KPIT Technologies Ltd.
Hinjewadi, Pune 411057 (IN)**

(72) Inventors:
• **Dwivedi, Manoj
  411057 Pune, Maharasthra (IN)**

• **Kayakkal, Jithesh
  411057 Pune, Maharasthra (IN)**
• **Alhat, Vidula Premnath
  411057 Pune, Maharasthra (IN)**
• **Yadav, Reecha Patiraj Prasad
  411057 Pune, Maharasthra (IN)**
• **Jose, Melisa Mariam
  411057 Pune, Maharasthra (IN)**
• **Jadhav, Suraj
  411057 Pune, Maharasthra (IN)**

(74) Representative: **Hoffmann Eitle
Patent- und Rechtsanwälte PartmbB
Arabellastraße 30
81925 München (DE)**

## (54) SYSTEM AND METHOD FOR LANE DETECTION

(57) The present disclosure relates to a system and method for lane detection capable of providing a warning to a driver of a vehicle in case the vehicle deviates from the detected lane. The method comprises steps of receiving a plurality of images captured by an image capturing device, pre-processing the received plurality of images to obtain a Region of Interest (RoI) in the plurality of images, and obtain one or more edge features over the RoI, extracting one or more ridge features based on processing of the RoI, detecting an indication of a footpoint of one or more probable lane lines based on the extracted ridge features, detecting a potential lane based on the footpoint of the one or more probable lane lines, applying a mask on the one or more edge features to obtain relevant edges, and detecting a final lane based on the extracted relevant edges and based on the footpoint of the one or more probable lane lines.

FIG. 3

EP 3 525 132 A1

**Description**

**TECHNICAL FIELD**

The present disclosure relates to systems and methods that incorporate image processing and computer vision techniques for detection of objects. More particularly, the present disclosure relates to systems and methods for detection of a lane of a road, the systems and methods being capable of providing a warning or an indication in case a vehicle deviates from the detected lane.

**BACKGROUND OF THE INVENTION**

Background description includes information that may be useful in understanding the present invention. It is not an admission that any of the information provided herein is prior art or relevant to the presently claimed invention, or that any publication specifically or implicitly referenced is prior art.

In today's scenario, road safety is an important issue all over the world. Thousands of accidents are reported every year leading to major fatalities. The major causes of these accidents are over-speeding, driver inattention, misconduct while driving, improper lane change, etc. According to a report published by JP Research India Pvt. Ltd., almost 30% of the accidents on Mumbai-Pune expressway were due to improper lane change, highest among all the causes.

To avoid the accidents due to improper lane change, a lane departure detection system plays an important role in transport systems. A typical lane departure detection system continuously monitors position of a vehicle with respect to a lane boundary and provides a warning to its driver, in case the vehicle deviates from the lane. As a camera sensor provides a low-cost solution for lane detection, many automobile manufacturers equip their vehicles with cameras to capture images of the road ahead in real-time. Different pre-processing techniques such as Gaussian smoothing, median filtering, etc. are used to reduce noise in the captured images. Further, different edge detection techniques involving use of gradient based operators, histogram based segmentation, edge linking and Hough transform etc. are used to detect edges of the lane in the captured images. However, most of these techniques do not provide accurate lane detection. In addition, these techniques do not provide for effective lane detection in case of a curved road.

In some conventional lane departure detection techniques, ridge detection followed by RANdom SAmple Consensus (RANSAC) method is used for lane detection. Ridge features are formed at points where intensity in grayscale image reaches a local maxima in a given direction. It is for this reason that ridges are considered better than edges as features to detect the lane boundary. In near region of the lane, ridge features can be obtained reliably. Hence, lane detection can be done reliably using only ridges, if desired detection range is up to 30 - 35 meters. Also, the ridge detection technique provides a reliable detection for both straight and curved road scenarios, in case of cast shadows, worn out and occluded markings, variable ambient lighting conditions etc. However, the ridge detection technique does not provide for a consistent and stable detection at far regions of the lane. Also, in case of curve lane detection, output obtained from ridge detection technique may take into consideration some erroneous or unwanted ridge features like those obtained due to a passing vehicle, causing false detection of segment lines of the lane.

Employing only edge features may not yield reliable curve detection as edge features are relatively less reliable in comparison to ridge features in the near region. Also for a given Region of Interest (RoI), number of edge features obtained is relatively more than number of ridge features, resulting in an increase in requirement of computational power and cost.

Thus, there is a need for lane detection system and method that combine advantages of both ridge and edge based detection techniques in order to enable accurate, reliable and consistent lane detection for straight as well as curved lanes over a long detection range. Further, there is a need of a system and method that provide a warning to a driver of a vehicle in case the vehicle deviates from the lane.

All publications herein are incorporated by reference to the same extent as if each individual publication or patent application were specifically and individually indicated to be incorporated by reference. Where a definition or use of a term in an incorporated reference is inconsistent or contrary to the definition of that term provided herein, the definition of that term provided herein applies and the definition of that term in the reference does not apply.

In some embodiments, the numbers expressing quantities of ingredients, properties such as concentration, reaction conditions, and so forth, used to describe and claim certain embodiments of the invention are to be understood as being modified in some instances by the term "about". Accordingly, in some embodiments, the numerical parameters set forth in the written description and attached claims are approximations that can vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the invention are approximations, the numerical values set forth in the specific examples are reported as precisely as practicable. The numerical values presented in some embodiments of the invention may contain certain errors necessarily resulting from the standard deviation found in their respective testing measurements.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

The recitation of ranges of values herein is merely intended to serve as a shorthand method of referring individually to each separate value falling within the range. Unless otherwise indicated herein, each individual value is incorporated into the specification as if it were individually recited herein. All methods described herein can be performed in any suitable order unless otherwise indicated herein or otherwise clearly contradicted by context. The use of any and all examples, or exemplary language (e.g. "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

Groupings of alternative elements or embodiments of the invention disclosed herein are not to be construed as limitations. Each group member can be referred to and claimed individually or in any combination with other members of the group or other elements found herein. One or more members of a group can be included in, or deleted from, a group for reasons of convenience and/or patentability. When any such inclusion or deletion occurs, the specification is herein deemed to contain the group as modified thus fulfilling the written description of all groups used in the appended claims.

## OBJECTS OF THE INVENTION

It is a general object of the present disclosure to provide a system and method for detection of a lane.

It is another object of the present invention to provide a system and method to warn a driver of a vehicle, in case the vehicle deviates from the detected lane.

It is another object of the present invention to provide a system and method for lane detection that detects the lane for straight roads as well as curved roads.

It is another object of the present invention to provide a system and method for lane detection that combines advantages of both ridge and edge based detection techniques.

It is yet another object of the present invention to provide a system and method for lane detection that reliably, accurately and consistently detects the lane.

It is still another object of the present invention to provide a low-cost solution for reliable lane detection.

## SUMMARY

The present disclosure relates to a system and method for lane detection capable of providing a warning to a driver of a vehicle in case the vehicle deviates from the detected lane. An aspect of the present disclosure pertains to a method for lane detection including the steps of receiving, at a computing device, a plurality of images captured by an image capturing device; pre-processing, at the computing device, the received plurality of images to obtain a Region of Interest (RoI) in the plurality of images and obtain one or more edge features over the RoI; extracting, at the computing device, one or more ridge features based on processing of the RoI; detecting, at the computing device, an indication of a footpoint of one or more probable lane lines based on the extracted ridge features of the RoI; detecting, at the computing device, a potential lane based on the extracted ridge features and the footpoint of the one or more probable lane lines; applying, at the computing device, a mask on the one or more edge features so as to obtain/extract relevant edges, the mask being based on the potential lane; and detecting, at the computing device, a final lane based on the extracted relevant edges and the footpoint of the one or more probable lane lines.

In an embodiment, the step of pre-processing of the plurality of images further comprises grayscaling a first set of the plurality of images; obtaining the RoI based on the first set of grayscaled images; dividing the RoI into a near region, mid region, and far region, subjecting the RoI to Gaussian smoothing; and obtaining the one or more edge features over the RoI based on an edge detection technique.

In an embodiment, the step of detecting the footpoint indicative of position of the probable one or more lane lines further comprises the steps of: laterally splitting the RoI into at least three regions; fitting a line to each of the extracted ridge features in the left region and the right region of the at least three regions of the RoI; and validating the line in the left region and the right region of the RoI.

In an embodiment, the step of detecting the potential lane further comprises the step of capturing left and right curves of the potential lane.

In an embodiment, the step of detecting the potential lane further comprises the steps of: segmenting the RoI into a plurality of segments based on the footpoint of the one or more probable lane lines and assessment of detection of the potential lane in at least one adjacent segment of the plurality of segments; accumulating the extracted ridge features in each of the plurality of segments by maintaining a log of the extracted ridge features in each of the plurality of segments; associating multiple ridge features in each of the plurality of segments with a line by implementing a line fitting technique; validating the line fitted to the multiple ridge features in each of the plurality of segments using a segment validation technique; connecting the line associated with/fitted to the multiple ridge features in each of the plurality of segments with a line of an adjacent segment by implementing a segment connectivity technique; performing a distance based line validation between the connected line segments obtained for each of a left side and a right side of the lane; and fitting a curve on the connected line segments obtained for each of the left side and the right side so as to capture left and right curves of the potential lane.

In an embodiment, the step of detecting the final lane based on the extracted relevant edges further comprises the steps of segmenting the RoI into a plurality of segments based on the footpoint of the one or more probable lane lines and by assessing detection of the final lane in at least one adjacent segment; segregating the one or more edge features corresponding to inner edges of the one or more probable lane lines from the relevant edges in each of the plurality of segments; associating multiple relevant edges in each of the plurality of segments with a line by implementing a line fitting technique; validating the line fitted to the multiple relevant edges in each of the plurality of segments using a segment validation technique; connecting the line associated with/fitted to the multiple relevant edges in each of the plurality of segments with a line of an adjacent segment by implementing a segment connectivity technique, performing a distance based line validation between the connected line segments obtained for each of the left side and the right side of the lane, and fitting a curve on the connected line segments obtained for each of the left side and the right side of the lane, so as to capture left and right curves of the final lane.

In an embodiment, the method further comprises the step of providing any or a combination of an indication and at least one parameter of the final detected lane to a user.

Another aspect of the present disclosure pertains to a system for lane detection that comprises a non-transitory storage device having embodied therein one or more routines operable to detect a final lane, and one or more processors coupled to the non-transitory storage device, wherein the one or more routines comprises an image pre-processing module, which when executed by the one or more processors, receives a plurality of images captured by an image capturing device, and pre-processes the received plurality of images to obtain a Region of Interest (RoI) in the plurality of images and further obtain one or more edge features over the RoI; a ridge feature extraction module, which when executed by the one or more processors, extracts one or more ridge features based on processing of the RoI; a potential lane detection module, which when executed by the one or more processors, detects an indication of a footpoint of one or more probable lane lines based on the extracted ridge features of the RoI, and obtains a potential lane based on the extracted ridge features and the footpoint of the one or more probable lane lines; a relevant edges retrieval module, which when executed by the one or more processors, applies a mask on the one or more edge features so as to obtain relevant edges, the mask being based on the potential lane; and a final lane detection module, which when executed by the one or more processors, detects the final curved lane based on the extracted relevant edges and the footpoint of the one or more probable lane lines.

In an embodiment, the image pre-processing module is further configured to grayscale a first set of the plurality of images, obtain the RoI based on the first set of grayscaled images, divide the RoI into a near region, mid region, and far region, subject the RoI to Gaussian smoothing, and obtain the one or more edge features over the RoI based on an edge detection technique.

In an embodiment, the potential lane detection module is configured to laterally split the RoI into at least three regions, fit a line to each of the extracted ridge features in a left region and a right region of the at least three regions of the RoI, and validate the line in the left region and the right region of the RoI.

In an embodiment, the potential lane is detected based on capturing of left and right curves of the potential lane.

In an embodiment, the potential lane detection module is configured to segment the RoI into a plurality of segments based on the footpoint of the one or more probable lane lines and assessment of detection of the potential lane in at least one adjacent segment; accumulate the extracted ridge features in each of the plurality of segments by maintaining a log of the extracted ridge features in each of the plurality of segments; associate multiple ridge features in each of the plurality of segments with a line by implementing a line fitting technique; validate the line fitted to the multiple ridge features in each of the plurality of segments using a segment validation technique; connect the line associated with/fitted to the multiple ridge features in each of the plurality of segments with a line of an adjacent segment by implementing a segment connectivity technique; perform a distance based line validation between the connected line segments obtained for each of a left side and a right side of the lane, and fit a curve on the connected line segments obtained for each of the left side and the right side so as to capture left and right curves of the potential lane.

In an embodiment, the potential lane is detected to generate a pre-defined buffer region on any or both of its left and right sides. In an embodiment, the potential lane acts as the mask to extract the relevant edges of the RoI.

In an embodiment, the mask is a dynamic mask and varies based on change in potential lane based on the multiple ridge features.

In an embodiment, the final curved lane detection module is configured to segment the RoI into a plurality of segments based on the footpoint of the one or more probable lane lines and by assessing detection of the final lane in at least one adjacent segment, segregate the one or more edge features corresponding to inner edges of the one or more probable lane lines from the relevant edges in each of the plurality of segments, associate multiple relevant edges in each of the plurality of segments with a line by implementing a line fitting technique, validate the line fitted to the multiple relevant edges in each of the plurality of segments using a segment validation technique, connect the line associated with/fitted to the multiple relevant edges in each of the plurality of segments with a line of an adjacent segment by implementing a segment connectivity technique, perform a distance based line validation between the connected line segments obtained for each of the left side and the right side of the lane, and fit a curve on the connected line segments obtained for each of the left side and the right side of the lane, so as to capture left and right curves of the final lane.

In an embodiment, the proposed system is further configured to provide any or a combination of an indication and at least one parameter of the final detected lane to a user.

The above and other objects, features, advantages, technical and industrial significance of this invention will be better understood by reading the following detailed description of presently preferred embodiments of the invention, when considered in connection with the accompanying drawings.

## BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.

FIG. 1 illustrates an exemplary architectural representation of proposed system for lane detection in accordance to an embodiment of the present disclosure.

FIG. 2 illustrates an exemplary representation of various modules of the proposed system for lane detection in accordance to an embodiment of the present disclosure.

FIG. 3 illustrates an exemplary flowchart representation of proposed method for lane detection in accordance to an embodiment of the present disclosure.

FIG. 4 illustrates an exemplary flowchart representation of a method for detection of potential lane in accordance to an embodiment of the present disclosure.

FIG. 5 illustrates an exemplary flowchart representation of a method for detection of a final lane in accordance to an embodiment of the present disclosure.

FIGs. 6A through 6E illustrate exemplary photographic representations of different road scenarios post implementation of segment creation, ridges accumulation and line fitting towards detection of potential lane in accordance to an embodiment of the present disclosure.

FIGs. 7A through 7E illustrate exemplary photographic representations of different road scenarios post implementation of segment validation, segment connectivity, and distance based line validation towards detection of potential lane in accordance to an embodiment of the present disclosure.

FIG. 8A illustrates an exemplary photographic representation of a road scenario post implementation of Bezier curve fitting using ridge features for a straight road in accordance to an embodiment of the invention.

FIG. 8B illustrates an exemplary photographic representation of a road scenario post implementation of Bezier curve fitting using ridge features for a slight curve road in accordance to an embodiment of the invention.

FIG. 8C illustrates an exemplary photographic representation of a road scenario post implementation of Bezier curve fitting using ridge features for a left sharp curve road in accordance to an embodiment of the invention.

FIG. 8D illustrates an exemplary photographic representation of a road scenario post implementation of Bezier curve fitting using ridge features for a right sharp curve road in accordance to an embodiment of the invention.

FIGs. 9A through 9D illustrate exemplary photographic representations illustrating extraction of feature points using dynamic mask creation for a first normal road scenario in accordance to an embodiment of the present disclosure.

FIGs. 10A through 10D illustrate exemplary photographic representations illustrating extraction of feature points using dynamic mask creation for a second normal road scenario in accordance to an embodiment of the present disclosure.

FIGs. 11A through 11D illustrate exemplary photographic representations illustrating extraction of feature points using dynamic mask creation for a small right curved road scenario in accordance to an embodiment of the present disclosure.

FIGs. 12A through 12D illustrate exemplary photographic representations illustrating extraction of feature points using dynamic mask creation for a small left curved road scenario in accordance to an embodiment of the present disclosure.

FIGs. 13A through 13D illustrate exemplary photographic representations illustrating extraction of feature points using dynamic mask creation for a first sharp left curved road scenario in accordance to an embodiment of the present disclosure.

FIGs. 14A through 14D illustrate exemplary photographic representations illustrating extraction of feature points using dynamic mask creation for a second sharp left curved road scenario in accordance to an embodiment of the present disclosure.

FIGs. 15A through 15D illustrate exemplary photographic representations illustrating extraction of feature points using dynamic mask creation for a first lane change scenario in accordance to an embodiment of the present disclosure.

FIGs. 16A through 16D illustrate exemplary photographic representations illustrating extraction of feature points using dynamic mask creation for a second lane change scenario in accordance to an embodiment of the present disclosure.

FIGs. 17A thorough 17E illustrate exemplary photographic representations of a road scenario post implementation of segment creation, dynamic RoI selection, copying of inner edges, line fitting using Origin Shift Line Detection (OSLD), segment validation and segment connectivity respectively towards detection of final lane in accordance to an embodiment of the present disclosure.

FIG. 18A illustrates an exemplary photographic representation of a road scenario post implementation of Bezier curve fitting using edge features for a straight road in accordance to an embodiment of the present disclosure.

FIG. 18B illustrates an exemplary photographic representation of a road scenario post implementation of Bezier curve fitting using edge features for a slight left curved road in accordance to an embodiment of the present disclosure.

FIG. 18C illustrates an exemplary photographic representation of a road scenario post implementation of Bezier curve fitting using edge features for a left slight right curve road in accordance to an embodiment of the present disclosure.

FIG. 18D illustrates an exemplary photographic representation of a road scenario post implementation of Bezier curve fitting using edge features for a sharp right curve road in accordance to an embodiment of the present disclosure.

FIG. 18E illustrates an exemplary photographic representation of a road scenario post implementation of Bezier curve fitting using edge features for a sharp left curve road in accordance to an embodiment of the present disclosure.

FIGs. 19A through 19D illustrate exemplary photographic representations of different road scenarios post implementation of Bezier curve fitting using edge features in case of poor visibility in accordance to an embodiment of the present disclosure.

FIGs. 20A through 20D illustrate exemplary photographic representations of final detected lane for a straight road, a slight curved road, a left sharp curve and a right sharp curve respectively in accordance to an embodiment of the present disclosure.

FIG. 21 illustrates an exemplary computer system in which or with which embodiments of the present invention can be utilized in accordance with embodiments of the present disclosure.

**DETAILED DESCRIPTION**

In the following description, numerous specific details are set forth in order to provide a thorough understanding of embodiments of the present invention. It will be apparent to one skilled in the art that embodiments of the present invention may be practiced without some of these specific details.

Embodiments of the present invention include various steps, which will be described below. The steps may be performed by hardware components or may be embodied in machine-executable instructions, which may be used to cause a general-purpose or special-purpose processor programmed with the instructions to perform the steps. Alternatively, steps may be performed by a combination of hardware, software, and firmware and/or by human operators.

Embodiments of the present invention may be provided as a computer program product, which may include a machine-readable storage medium tangibly embodying thereon instructions, which may be used to program a computer (or other electronic devices) to perform a process. The machine-readable medium may include, but is not limited to, fixed (hard) drives, magnetic tape, floppy diskettes, optical disks, compact disc read-only memories (CD-ROMs), and magneto-optical disks, semiconductor memories, such as ROMs, PROMs, random access memories (RAMs), programmable read-only memories (PROMs), erasable PROMs (EPROMs), electrically erasable PROMs (EEPROMs), flash memory, magnetic or optical cards, or other type of media/machine-readable medium suitable for storing electronic instructions (e.g., computer programming code, such as software or firmware).

Various methods described herein may be practiced by combining one or more machine-readable storage media containing the code according to the present invention with appropriate standard computer hardware to execute the code contained therein. An apparatus for practicing various embodiments of the present invention may involve one or more computers (or one or more processors within a single computer) and storage systems containing or having network access to computer program(s) coded in accordance with various methods described herein, and the method steps of the invention could be accomplished by modules, routines, subroutines, or subparts of a computer program product.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

All methods described herein can be performed in any suitable order unless otherwise indicated herein or otherwise clearly contradicted by context. The use of any and all examples, or exemplary language (e.g. "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

The present invention relates to a system and method for lane detection that is capable of providing a warning to a driver of a vehicle in case the vehicle deviates from the lane. System and method of the present disclosure enable driver to avoid possible accidents due to unintentional lane change by alerting the driver about the lane deviation i.e. when he/she inadvertently or intentionally changes the lane or deviates therefrom. The proposed system and method further provide a reliable, accurate and consistent lane detection technique for both straight and curved road scenarios. The proposed system and method assist in improvement of response time of the driver and hence, help in avoiding accidents due to unintentional lane change or traffic misconduct.

According to an embodiment of the present disclosure, the system and method of the present disclosure utilizes image processing and computer vision techniques for lane detection. A plurality of images of the lane in front of a vehicle are captured, using an image capturing device such as a camera, a camcorder, a computing device, a mobile phone, a camera sensor and the likes configured with a front portion of vehicle. For instance, the image capturing device can be configured with a rear-view mirror enclosure of the vehicle. The captured images are then processed to detect feature points, also referred to as ridges, on the lane. The detected ridges are then used to obtain lane boundaries of the lane in which the vehicle is travelling. Further, the proposed system and method overcomes the limitation of detecting sharp curved lanes by complementing ridge detection techniques with edge detection techniques or by complementing edge detection techniques with ridge detection techniques. Also, the proposed system and method performs continuous diagnostics and notifies driver of the vehicle in case the vehicle unintentionally deviates from the lane.

According to an embodiment of the present disclosure, system and method of the present disclosure provides for detection of a lane over a long detection range. Apart from determining position of the vehicle with respect to the lane, a longer detection range is important to better assess a curve in the lane. For instance, a detection range of up to 80 meters can provide relevant information to an autonomous vehicle in terms of a curved section of the lane ahead of the autonomous vehicle, presence of one or more object on the lane, etc., thereby enabling the autonomous vehicle to make timely maneuvers. In the far region of the lane, lane markings are not visible clearly, leading to obtaining of very few ridge features. However, the edge features obtained thereof are better than the ridge features in the far region of the lane. Thus, the present disclosure assists in achieving a long-range detection of curved as well as straight sections of the lane by complementing ridge features based lane detection with the edge features based lane detection.

In an embodiment, ridge features are formed with feature points where intensity in grayscale image reaches local maxima in a given direction. To identify such feature points and collect those as ridge features, a customized 1-D Gaussian filter is employed. Kernel size of the Gaussian filter is selected based on the width of the lane marking, say in pixels.

According to another embodiment of the present invention, the proposed system and method utilize image processing techniques to interpret captured images and provide any or a combination of an indication and at least one parameter of the detected lane to a user, including, but not limited to a driver, a traffic regulator and a vehicle owner, such that when the vehicle is deviating from the detected lane, a warning can be provided to, say the driver of the vehicle to provide the driver with proper indication of the lane deviation so that the driver can make timely maneuvers. In an embodiment, image processing is performed on a plurality of captured images to detect the lane deviation and alert the driver accordingly.

According to yet another embodiment of the present invention, the method of lane detection comprises pre-processing the captured images, detecting lane based on ridge feature based detection techniques, and removing any unwanted edges by mask creation and further detecting the lane using edge feature based detection techniques. Conventional lane detection techniques using only ridges feature based detection techniques do not provide for a consistent and stable detection at far region of the lane. Hence, detection of the lane using ridge feature based detection techniques is further complemented with an edge feature based detection technique, to provide a consistent and stable detection of lane at near as well as far region of the lane.

According to still another aspect of the present disclosure, a 6th degree Bezier curve fitting technique is used to fit ridge features and edge features smoothly on the lane. Further, a suitable validation scheme is used to ensure reliability of a detected straight or curved section of the lane.

According to still another aspect of the present disclosure, reliable lane detection at longer detection range can be achieved either by complementing ridge feature based detection techniques with edge feature based detection techniques or by complementing edge feature based detection techniques by ridge feature based detection techniques.

In one embodiment, image capturing device used for implementation of the present invention can be selected as an on-board forward-facing camera that captures images of at least a section of the lane in front of the vehicle. Image processing may be performed on captured images to detect the lane.

The present disclosure relates to a system and method for lane detection capable of providing a warning to a driver of a vehicle in case the vehicle deviates from the detected lane. An aspect of the present disclosure pertains to a method for lane detection including the steps of receiving, at a computing device, a plurality of images captured by an image capturing device; pre-processing, at the computing device, the received plurality of images to obtain a Region of Interest (RoI) in the plurality of images and obtain one or more edge features over the RoI; extracting, at the computing device, one or more ridge features based on processing of the RoI; detecting, at the computing device, an indication of a footpoint of one or more probable lane lines based on the extracted ridge features of the RoI; detecting, at the computing device, a potential lane based on the extracted ridge features and the footpoint of the one or more probable lane lines; applying, at the computing device, a mask on the one or more edge features so as to obtain/extract relevant edges, the mask being based on the potential lane; and detecting, at the computing device, a final lane based on the extracted relevant edges and the footpoint of the one or more probable lane lines.

In an embodiment, the step of pre-processing of the plurality of images further comprises grayscaling a first set of the plurality of images; obtaining the RoI based on the first set of grayscaled images; dividing the RoI into a near region, mid region, and far region, subjecting the RoI to Gaussian smoothing; and obtaining the one or more edge features over the RoI based on an edge detection technique.

In an embodiment, the step of detecting the footpoint indicative of position of the probable one or more lane lines further comprises the steps of: laterally splitting the RoI into at least three regions; fitting a line to each of the extracted ridge features in a left region and a right region of the at least three regions of the RoI; and validating the line in the left region and the right region of the RoI.

In an embodiment, the step of detecting the potential lane further comprises the step of capturing left and right curves of the potential lane.

In an embodiment, the step of detecting the potential lane further comprises the steps of: segmenting the RoI into a plurality of segments based on the footpoint of the one or more probable lane lines and assessment of detection of the potential lane in at least one adjacent segment of the plurality of segments; accumulating the extracted ridge features in each of the plurality of segments by maintaining a log of the extracted ridge features in each of the plurality of segments; associating multiple ridge features in each of the plurality of segments with a line by implementing a line fitting technique; validating the line fitted to the multiple ridge features in each of the plurality of segments using a segment validation technique; connecting the line associated with/fitted to the multiple ridge features in each of the plurality of segments with a line of an adjacent segment by implementing a segment connectivity technique; performing a distance based line validation between the connected line segments obtained for each of a left side and a right side of the lane; and fitting a curve on the connected line segments obtained for each of the left side and the right side so as to capture left and right curves of the potential lane.

In an embodiment, the step of detecting the final lane based on the extracted relevant edges further comprises the steps of segmenting the RoI into a plurality of segments based on the footpoint of the one or more probable lane lines and by assessing detection of the final lane in at least one adjacent segment; segregating the one or more edge features corresponding to inner edges of the one or more probable lane lines from the relevant edges in each of the plurality of segments; associating multiple relevant edges in each of the plurality of segments with a line by implementing a line fitting technique; validating the line fitted to the multiple relevant edges in each of the plurality of segments using a segment validation technique; connecting the line associated with/fitted to the multiple relevant edges in each of the plurality of segments with a line of an adjacent segment by implementing a segment connectivity technique, performing a distance based line validation between the connected line segments obtained for each of the left side and the right side of the lane, and fitting a curve on the connected line segment obtained for each of the left side and the right side of the lane, so as to capture left and right curves of the final lane.

In an embodiment, the method further comprises the step of providing any or a combination of an indication and at least one parameter of the final detected lane to a user.

Another aspect of the present disclosure pertains to a system for lane detection that includes a non-transitory storage device having embodied therein one or more routines operable to detect a final lane, and one or more processors coupled to the non-transitory storage device, wherein the one or more routines comprises an image pre-processing module, which when executed by the one or more processors, receives a plurality of images captured by an image capturing device, and pre-processes the received plurality of images to obtain a Region of Interest (RoI) in the plurality of images and further obtain one or more edge features over the RoI; a ridge feature extraction module, which when executed by the one or more processors, extracts one or more ridge features based on processing of the RoI; a potential lane detection module, which when executed by the one or more processors, detects an indication of a footpoint of one or more probable lane lines based on the extracted ridge features of the RoI, and obtains a potential lane based on the extracted ridge features and the footpoint of the one or more probable lane lines; a relevant edges retrieval module, which when executed by the one or more processors, applies a mask on the one or more edge features so as to obtain relevant edges, the mask being based on the potential lane; and a final lane detection module, which when executed by the one or more processors, detects the final curved lane based on the extracted relevant edges and the footpoint of the one or more probable lane lines.

In an embodiment, the image pre-processing module is further configured to grayscale a first set of the plurality of images, obtain the RoI based on the first set of grayscaled images, divide the RoI into a near region, mid region, and far region, subject the RoI to Gaussian smoothing, and obtain the one or more edge features over the RoI based on an edge detection technique.

In an embodiment, the potential lane detection module is configured to laterally split the RoI into at least three regions, fit a line to each of the extracted ridge features in the left region and the right region of the at least three regions of the RoI, and validate the line in the left region and the right region of the RoI.

In an embodiment, the potential lane is detected based on capturing of left and right curves of the potential lane.

In an embodiment, the potential lane detection module is configured to segment the RoI into a plurality of segments based on the footpoint of the one or more probable lane lines and assessment of detection of the potential lane in at least one adjacent segment; accumulate the extracted ridge features in each of the plurality of segments by maintaining a log of the extracted ridge features in each of the plurality of segments; associate multiple ridge features in each of the plurality of segments with a line by implementing a line fitting technique; validate the line fitted to the multiple ridge features in each of the plurality of segments using a segment validation technique; connect the line associated with/fitted to the multiple ridge features in each of the plurality of segments with a line of an adjacent segment by implementing a segment connectivity technique; perform a distance based line validation between the connected line segments obtained for each of the left side and the right side of the lane, and fit a curve on the connected line segments obtained for each of the left side and the right side so as to capture left and right curves of the potential lane.

In an embodiment, the potential lane is detected to generate a pre-defined buffer region on any or both of its left and right sides. In an embodiment, the potential lane acts as the mask to extract the relevant edges of the RoI.

In an embodiment, the mask is a dynamic mask and varies based on change in potential lane based on the multiple ridge features.

In an embodiment, the final curved lane detection module is configured to segment the RoI into a plurality of segments based on the footpoint of the one or more probable lane lines and by assessing detection of the final lane in at least one adjacent segment, segregate the one or more edge features corresponding to inner edges of the one or more probable lane lines from the relevant edges in each of the plurality of segments, associate multiple relevant edges in each of the plurality of segments with a line by implementing a line fitting technique, validate the line fitted to the multiple relevant edges in each of the plurality of segments using a segment validation technique, connect the line associated with/fitted to the multiple relevant edges in each of the plurality of segments with a line of an adjacent segment by implementing a segment connectivity technique, perform a distance based line validation between the connected line segments obtained for each of the left side and the right side of the lane, and fit a curve on the connected line segments obtained for each of the left side and the right side of the lane, so as to capture left and right curves of the final lane.

In an embodiment, the proposed system is further configured to provide any or a combination of an indication and at least one parameter of the final detected lane to a user.

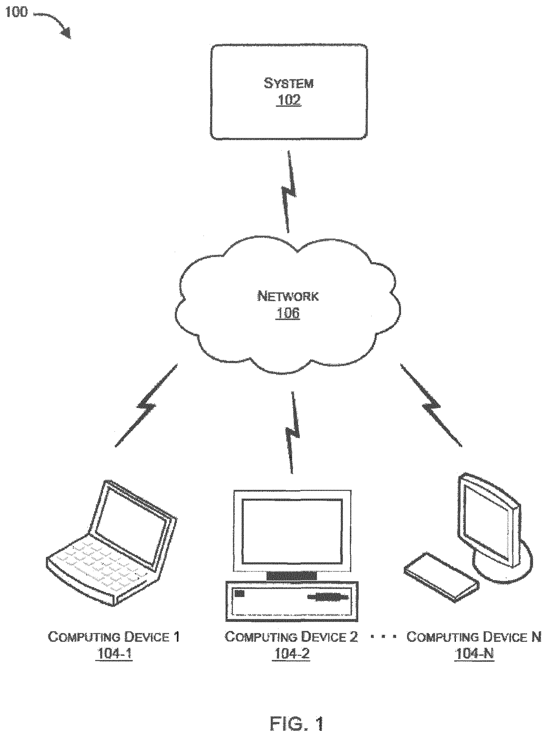

FIG. 1 illustrates an exemplary architectural representation of proposed system for lane detection in accordance to an embodiment of the present disclosure. The proposed system for lane detection 102 (also referred to the system 102 hereinafter) detects straight as well as curved sections of the lane by implementing image processing and computer vision based techniques. The system 102 can be communicatively coupled with one or more computing devices 104-1, 104-2,..., 104-N (individually referred to as the computing device 104 and collectively referred to as the computing devices 104 hereinafter) through a network 106. In an embodiment, the system 102 can be implemented using any or a combination of hardware components and software components such as a cloud, a server, a computing system, a computing device, a network device and the like. Further, the system 102 can interact with computing devices 104 through a website or an application that can reside in the computing devices 106. In an implementation, the system 102 can be accessed by a website or an application that can be configured with any operating system, including but not limited to, AndroidTM, iOSTM, and the like. Examples of the computing devices 106 can include, but are not limited to, a computing device associated with a vehicle, a traffic authority, a smart camera, a smart phone, a portable computer, a personal digital assistant, a handheld device and the like. In an implementation, the computing device 104 can be an image capturing device such as a camera sensor, a camcorder, a mobile phone, a personal digital assistant (PDA) and the like devices capable of capturing images of an object.

The network 106 may be a wireless network, wired network or a combination thereof. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the network 106 may include a variety of network devices, including routers, bridges, servers, computing devices, storage devices, etc.

In an aspect, the system 102 receives a plurality of images of a lane of a road by the image capturing device that can be embodied in the computing device 104, such as a camera sensor, a camcorder, a mobile phone, a personal digital assistant (PDA) and the like devices. In an embodiment, the image capturing device can be coupled with a front portion of a vehicle travelling in the lane of the road. For instance, the image capturing device can be a front facing camera coupled with a rear-view mirror enclosure assembly of the vehicle to enable capturing of the plurality of images of the lane in front of the vehicle.

In an aspect, the system 102 pre-processes the received plurality of images to acquire and/or obtain a Region of Interest (RoI) in the plurality of images, and obtains one or more edge features over the acquired RoI. In an embodiment, the system processes the received plurality of images by gray-scaling a first set of the plurality of images, obtains the RoI based on the first set of gray-scaled images, divides the RoI into a near region, mid region, and far region, subjects the RoI to Gaussian smoothing, and obtains the one or more edge features over the RoI based on an edge detection technique.

In an aspect, the system 102 extracts one or more ridge features based on processing of the RoI. The system 102 detects an indication of a footpoint of one or more probable lane lines based on the extracted ridge features of the RoI, and obtains a potential lane based on the extracted ridge features and the footpoint of the one or more probable lane lines. In an embodiment, the potential lane may be detected based on capturing of left and right curves of the potential lane.

In an embodiment, the proposed system 102 detects the potential lane by segmenting the RoI into a plurality of segments based on the footpoint of the one or more probable lane lines and assessment of detection of the potential lane in at least one adjacent segment, accumulating the extracted ridge features in each of the plurality of segments by maintaining a log of the extracted ridge features in each of the plurality of segments, associating multiple ridge features in each of the plurality of segments with a line by implementing a line fitting technique, validating the line fitted to the multiple ridge features in each of the plurality of segments using a segment validation technique, connecting the line associated with/fitted to the multiple ridge features in each of the plurality of segments with a line of an adjacent segment by implementing a segment connectivity technique, performing a distance based line validation between the connected line segments obtained for each of the left side and the right side of the lane, and fitting a curve on the connected line segments obtained for each of the left side and the right side, so as to capture left and right curves of the potential lane.

In an embodiment, the system 102 obtains the probable lane footpoints by laterally splitting the RoI into at least three regions, fitting a line to each of the extracted ridge features in the left region and the right region of the at least three regions of the RoI, and validating the line in the left region and the right region of the RoI.

In an aspect, the system 102 obtains relevant edges by applying a mask on the one or more edge features. In an embodiment, the potential lane is detected to generate a predefined buffer region on any or both of its left and right sides. In an embodiment, the potential lane acts as the mask to extract the relevant edges of the RoI. In an embodiment, the mask is a dynamic mask and varies based on change in potential lane based on the multiple ridge features.

In an aspect, the system 102 detects the final curved lane based on the extracted relevant edges by segmenting the RoI into a plurality of segments based on the footpoint of the one or more probable lane lines and by assessing detection of the final lane in at least one adjacent segment, segregating the one or more edge features corresponding to inner edges of the one or more probable lane lines from the relevant edges in each of the plurality of segments, associating multiple relevant edges in each of the plurality of segments with a line by implementing a line fitting technique, validating the line fitted to the multiple relevant edges in each of the plurality of segments using a segment validation technique, connecting the line associated with/fitted to the multiple relevant edges in each of the plurality of segments with a line of an adjacent segment by implementing a segment connectivity technique, performing a distance based line validation between the connected line segments obtained for each of the left side and the right side of the lane, and fitting a curve on the connected line segments obtained for each of the left side and the right side of the lane, so as to capture left and right curves of the final lane.

In an embodiment, the system 102 provides any or a combination of an indication and at least one parameter of the final detected lane to a user so as to enable the user to initiate timely manoeuvers of the vehicle to prevent any accidents due to unintended lane change. In an instance, the system 102 can warn a driver of the vehicle in case the vehicle starts deviating from the detected lane.

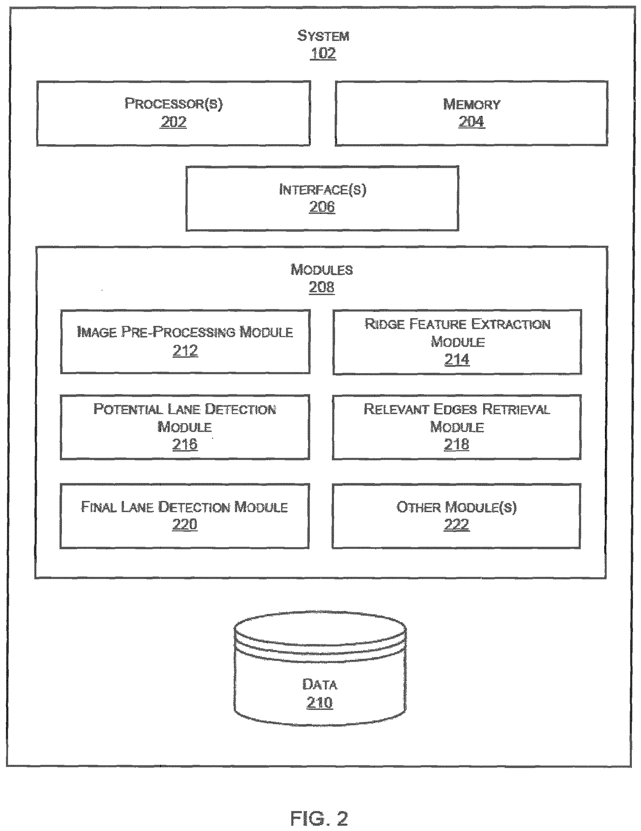

FIG. 2 illustrates an exemplary representation of various modules of the proposed system for lane detection in accordance to an embodiment of the present disclosure. The system 102 comprises a processor(s) 202, a memory 204 coupled to the processor(s) 202 and an interface(s) 206. The processor(s) 202 may be implemented as one or more microprocessors, microcomputers, microcontrollers, digital signal processors, central processing units, state machines, logic circuitries, and/or any devices that manipulate signals based on operational instructions. Among other capabilities, the processor(s) 202 may be configured to fetch and execute computer-readable instructions stored in the memory 204. The memory 204 can include any non-transitory computer-readable medium known in the art including, for example, volatile memory (e.g., RAM), and/or non-volatile memory (e.g., EPROM, flash memory, etc.).

The interface(s) 206 may include a variety of software and hardware interfaces, for example, a web interface, a graphical user interface, etc., allowing the system 102 to interact with computing devices 104. The interface(s) 206 can facilitate multiple communications within a wide variety of networks and protocol types, including wired networks, for example LAN, cable, etc., and wireless networks such as WLAN, cellular, or satellite. The interface(s) 206 may include one or more ports for connecting a number of devices to each other or to another server.

In an implementation, the system 102 can include modules 208 and data 210. In one embodiment, the modules 208 and the data 210 may be stored within the memory 204. In one example, the modules 208, amongst other things, can include routines, programs, objects, components, and data structures, which perform particular tasks or implement particular abstract data types. The modules 208 may also be implemented as signal processor(s), state machine(s), logic circuitries, and/or any other device or component that manipulate signals based on operational instructions. Further, the modules 208 can be implemented by one or more hardware components, by computer-readable instructions executed by a processing unit, or by a combination thereof. The data 210 can serve, amongst other things, as a repository for storing data fetched, processed, received and generated by one or more of the modules 208.

In an embodiment, the modules 208 further comprises an image pre-processing module 212, a ridge feature extraction module 214, a potential lane detection module 216, a relevant edges retrieval module 218, a final lane detection module 220, and other modules 222. The other modules 222 may perform various miscellaneous functionalities of the system 102. It would be appreciated that such aforementioned modules may be represented as a single module or a combination of different modules.

In an aspect, the image pre-processing module 212 of the system 102 retrieves/receives the plurality of images of the lane ahead of the vehicle by the image capturing device configured at the front portion of the vehicle. The image pre-processing module 212 processes the received plurality of images to obtain the RoI in the plurality of images and to further acquire one or more edge features over the RoI.

In an embodiment, the image pre-processing module 212 may process the received plurality of images by grayscaling a first set of the plurality of images, obtaining the RoI based on the first set of grayscaled images, dividing the RoI into a near region, mid region, and far region, subjecting the RoI to Gaussian smoothing, and obtaining the one or more edge features over the RoI based on an edge detection technique.

In an instance, the image pre-processing module 212 receives one or more input images from the image capturing device. The input images can include at least one grayscale image. A lower portion of the grayscale image is selected as a RoI image that only includes the RoI portion of the grayscale image. Hence, the grayscale image in full resolution, for example, 1280X960 is cropped to form another image of a lower resolution, for example, 1280X400 that contains only the RoI, i.e., only the lower portion of the grayscale image. In an embodiment, the image pre-processing module 212 ensures that only the RoI of the grayscale image is passed to subsequent stages to enable efficient lane detection.

In an embodiment, the image pre-processing module 212 may perform certain operations on the input images to obtain one or more edge features to be employed for reliable lane detection. The RoI image may be divided into three regions - namely near, mid and far region. In the proposed implementation, far region corresponds to top region, for example, top 30 rows of the RoI image, followed by mid region, for example, middle 130 rows of the RoI image, and near region, for example, lower 240 rows of the RoI image. Each of the three regions of the RoI image i.e. near, mid and far region are subjected to Gaussian smoothing. To deal with image noise, a suitable blur coefficient is employed for smoothing in each region.

In an embodiment, Canny edge detection is used to detect the one or more edges in the Gaussian smoothed image. Employing suitable low and high threshold values on a Canny operator in each region, i.e., near, middle and far, edge features are obtained over the RoI image. The detected edge features can then be used to assist piecewise lane detection of curved as well as straight lanes.

In an embodiment, edge features may include one of the features that are relevant for estimating structure of an object in an image. Edges are generally formed on a boundary region between multiple regions of the image. According to an embodiment of the present disclosure, detection of edge features by the image pre-processing module 212 aids the piecewise lane detection. Preferably, a Canny edge detection algorithm or any other suitable detection algorithm, including, but not limited to, Sobel edge detector, Prewitt edge detector, etc. as known in the art can be used to obtain the one or more edge features from the Gaussian smoothed image. In the Canny edge detection algorithm, the intensity gradient of an image is calculated after smoothing the image. Thereafter, non-maximum suppression is carried out to get rid of spurious response to edge detection, and potential edges are calculated by applying double threshold. Finally, edge detection is done by suppressing all the other edges that are weak and not connected to strong edges.

In an aspect, the ridge feature extraction module 214 extracts one or more ridge features based on processing of the RoI. The ridge feature extraction module 214 detects an indication of a footpoint of one or more probable lane lines based on the extracted ridge features of the RoI.

In an aspect, the potential lane detection module 216 obtains the probable lane footpoints by laterally splitting the RoI into at least three regions, fitting a line to each of the extracted ridge features in a left region and a right region of the at least three regions of the RoI, and validating the line in the left region and the right region of the RoI.

In an embodiment, the potential lane detection module 216 extracts the one or more ridge features by segmenting the RoI into a plurality of segments based on the footpoint of the one or more probable lane lines and assessment of detection of the potential lane in at least one adjacent segment, accumulating the extracted ridge features in each of the plurality of segments by maintaining a log of the extracted ridge features in each of the plurality of segments, associating multiple ridge features in each of the plurality of segments with a line by implementing a line fitting technique, validating the line fitted to the multiple ridge features in each of the plurality of segments using a segment validation technique, connecting the line associated with/fitted to the multiple ridge features in each of the plurality of segments with a line of an adjacent segment by implementing a segment connectivity technique, performing a distance based line validation between the connected line segments obtained for each of the left side and the right side of the lane, and fitting a curve on the connected line segments obtained for each of the left side and the right side, so as to capture left and right curves of the potential lane.

In an aspect, the relevant edges retrieval module 218 may obtain relevant edges by applying a mask on the one or more edge features. In an embodiment, the potential lane is detected to generate a pre-defined buffer region on any or both of its left and right sides. In an embodiment, the potential lane acts as the mask to extract the relevant edges of the RoI. In an embodiment, the mask is a dynamic mask and varies based on change in potential lane based on the multiple ridge features.

In an aspect, the final lane detection module 220 detects the final curved lane based on the extracted relevant edges by segmenting the RoI into a plurality of segments based on the footpoint of the one or more probable lane lines and by assessing detection of the final lane in at least one adjacent segment, segregating the one or more edge features corresponding to inner edges of the one or more probable lane lines from the relevant edges in each of the plurality of segments, associating multiple relevant edges in each of the plurality of segments with a line by implementing a line fitting technique, validating the line fitted to the multiple relevant edges in each of the plurality of segments using a segment validation technique, connecting the line associated with/fitted to the multiple relevant edges in each of the plurality of segments with a line of an adjacent segment by implementing a segment connectivity technique, performing a distance based line validation between the connected line segments obtained for each of the left side and the right side of the lane, and fitting a curve on the connected line segments obtained for each of the left side and the right side of the lane, so as to capture left and right curves of the final lane.

In an embodiment, the final lane detection module 220 is configured to provide any or a combination of an indication and at least one parameter of the final detected lane to a user so as to enable the user to initiate timely manoeuvres of the vehicle to prevent any accidents due to unintended lane change. For example, the final lane detection module 220 can alert the driver of the vehicle in case the vehicle is deviating from the detected lane.

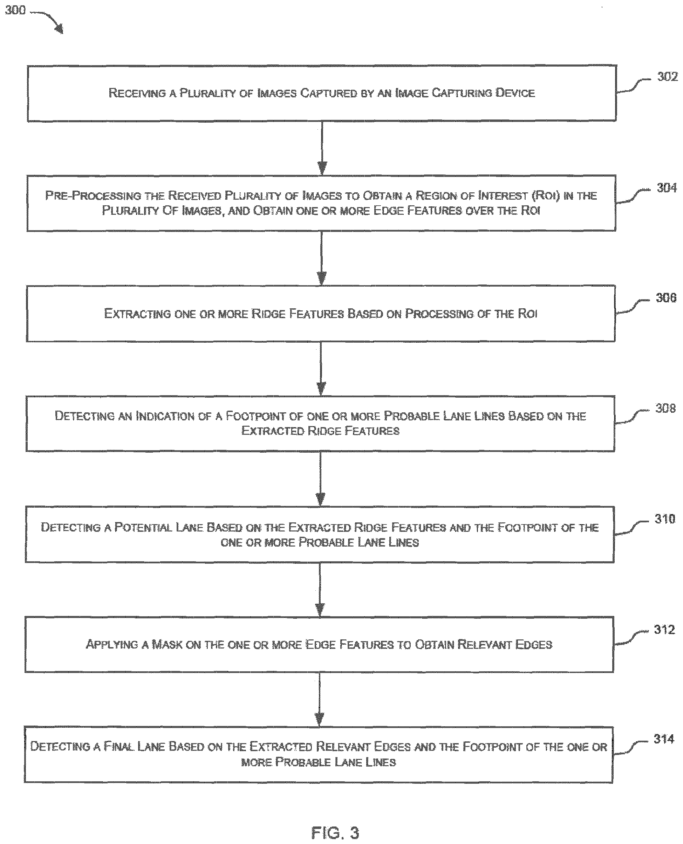

FIG. 3 illustrates an exemplary flowchart representation of proposed method 300 for lane detection in accordance to an embodiment of the present disclosure. In an aspect, the proposed method 300 comprises a step 302 for receiving a plurality of images captured by an image capturing device. In an embodiment, image capturing device may be configured at a front portion of a vehicle, for example, hood of the vehicle, to capture the plurality of images of the lane in front of the vehicle. In an embodiment, the image capturing device can be any or a combination of a camera sensor, a camcorder, a computing device, a network device, a mobile phone, a PDA and the like devices capable of capturing images of an object.

In an aspect, the method 300 comprises a step 304 for pre-processing the received plurality of images to obtain the RoI in the plurality of images, and further to obtain one or more edge features over the RoI. In an embodiment, the step 304 for pre-processing of the plurality of images may further include grayscaling a first set of the plurality of images, obtaining the RoI based on the first set of grayscaled images, dividing the RoI into a near region, mid region, and far region, subjecting the RoI to Gaussian smoothing, and obtaining the one or more edge features over the RoI based on an edge detection technique.

In an aspect, the method 300 comprises a step 306 for extracting one or more ridge features based on processing of the RoI.

In an aspect, the method 300 comprises a step 308 for detecting an indication of a footpoint of one or more probable lane lines based on the extracted ridge features of the RoI. In an embodiment, the step 308 for detecting the footpoint indicative of position of the probable one or more lane lines further includes the steps of laterally splitting the RoI into at least three regions, fitting a line to each of the extracted ridge features in a left region and a right region of the at least three regions of the RoI, and validating the line in the left region and the right region of the RoI.

In an aspect, the method 300 comprises a step 310 for detecting a potential lane based on the extracted ridge features and the footpoint of the one or more probable lane lines. In an embodiment, the step 310 for detecting the potential lane further includes the step of capturing left and right curves of the potential lane. In an embodiment, the potential lane is detected based on capturing of left and right curves of the potential lane.

In an aspect, the method 300 comprises a step 312 for applying a mask on the one or more edge features so as to obtain relevant edges, the mask being based on the potential lane. In an embodiment, the potential lane is detected to generate a pre-defined buffer region on any or both of its left and right sides. The potential lane acts as the mask to extract the relevant edges of the RoI. In an embodiment, the mask is a dynamic mask and varies based on change in potential lane based on the multiple ridge features.

In an aspect, the method 300 comprises a step 314 for detecting a final lane based on the extracted relevant edges. In an implementation, the step 314 of detecting the final lane based on the extracted relevant edges further includes the steps of segmenting the RoI into a plurality of segments based on the footpoint of the one or more probable lane lines and by assessing detection of the final lane in at least one adjacent segment, segregating the one or more edge features corresponding to inner edges of the one or more probable lane lines from the relevant edges in each of the plurality of segments, associating multiple relevant edges in each of the plurality of segments with a line by implementing a line fitting technique, validating the line fitted to the multiple relevant edges in each of the plurality of segments using a segment validation technique, connecting the line associated with/fitted to the multiple relevant edges in each of the plurality of segments with a line of an adjacent segment by implementing a segment connectivity technique, performing a distance based line validation between the connected line segments obtained for each of the left side and the right side of the lane, and fitting a curve on the connected line segments obtained for each of the left side and the right side of the lane, so as to capture left and right curves of the final lane.

In an embodiment, the method 300 further comprises a step of providing any or a combination of an indication and at least one parameter of the final detected lane to a user.

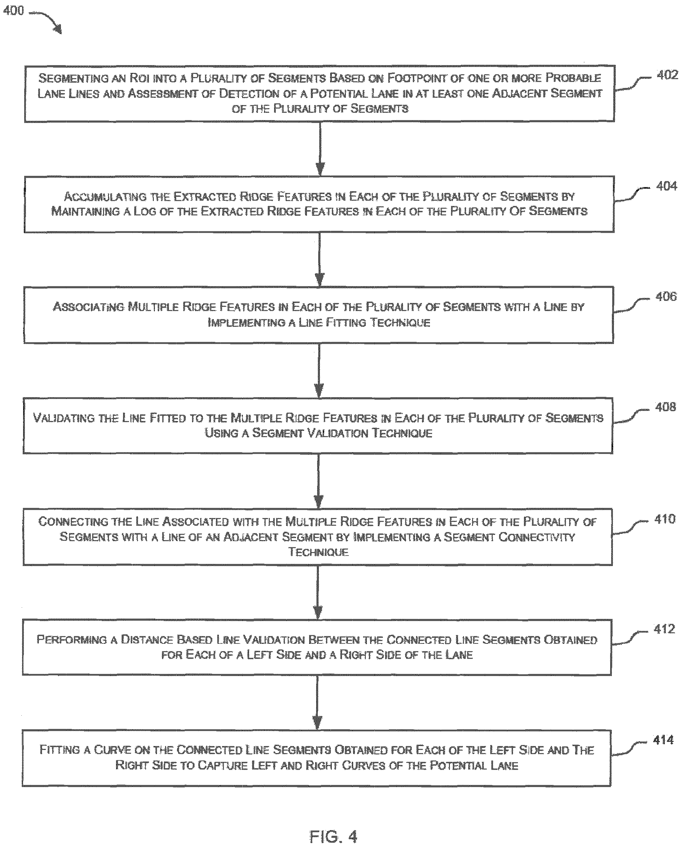

FIG. 4 illustrates an exemplary flowchart representation of a method for detection of a potential lane in accordance to an embodiment of the present disclosure. In an embodiment, the potential lane may be detected using extracted ridge features. In an embodiment, the method 400 for detection of the potential lane may include a step 402 for segmentation of the RoI into a plurality of segments based on the footpoint of the one or more probable lane lines and assessment of detection of the potential lane in at least one adjacent segment of the plurality of segments, a step 404 for accumulation of the extracted ridge features in each of the plurality of segments by maintaining a log of the extracted ridge features in each of the plurality of segments, a step 406 for association of multiple ridge features in each of the plurality of segments with a line by implementing a line fitting technique, a step 408 for validation of the line fitted to the multiple ridge features in each of the plurality of segments using a segment validation technique, a step 410 for connecting the line associated with/fitted to the multiple ridge features in each of the plurality of segments with a line of an adjacent segment by implementing a segment connectivity technique, a step 412 for performing a distance based line validation between the connected line segments obtained for each of the left side and the right side of the lane, and a step 414 for fitting a curve on the connected line segments obtained for each of the left side and the right side to capture left and right curves of the potential lane.

In an embodiment, the steps 402 to 414 of the method 400 for detection of the potential lane may be implemented as:

**Segment creation:** A base segment is defined using a foot point of a linear lane model. The linear lane model refers to the lane detection obtained with an assumption that even a curved section of the lane can be approximated by a line equation. For implementation of such a linear lane model, the RoI image as obtained from the image pre-processing module 212 can be laterally split into three regions - left, center and right. A line is fitted using an Origin Shift Line Detection (OSLD) method in the left and right regions. The OSLD method ensures that the line containing highest number of ridge points and having a slope value within a predefined slope limit is taken as the detected line. The linear left and right lines so obtained are validated, before implementing detection of the potential lane.

In an implementation, a region, for example, of approximately 100 pixels, on each side of the foot point is marked as the RoI, which makes up the bottommost segment. The ridges detected in the RoI so obtained are then employed to fit a line using the OSLD method. The top point of the line obtained in the current RoI serves as a reference point for defining the next RoI. In other words, the top point of line in each segment acts as base point for defining the RoI above it. Based on the top point of the line in a segment below, the RoI is defined for the segment above it by taking some fixed offset on the left and right sides. A similar process is followed in order to define all the RoIs (alternately referred to as segments) that in turn enables the potential lane detection. Each of the left and the right lane includes five segments in the proposed piecewise lane detection model. The bottommost segment employs the linear lane model output and is nearest to the vehicle, while the remaining segments span the middle and far region of the RoI obtained from the image pre-processing module 212.

**Ridges accumulation:** The step of ridge accumulation may comprise of two steps - (i) copying of ridges, and (ii) maintain ridge history. Individual segment boundaries and coordinates of all ridge points present in the image are used in copying of the ridges. According to defined limits for each segment, ridges that lie in the RoI are copied/accumulated in a structure for further use. In an instance, for each segment, a history of the ridge points obtained for that segment in the past few frames can be maintained. This is done with an aim of obtaining reliable line estimation for a segment even in the absence of ridges in a particular frame. Dashed lanes and occlusion due to wiper are some of the common reasons for the absence of ridges in some or all of the segments in a particular frame. In the proposed implementation, maintaining ridge history is found to improve the detection except during the case where a transition of lane takes place. Hence, the history is reset whenever a lane change scenario is detected.

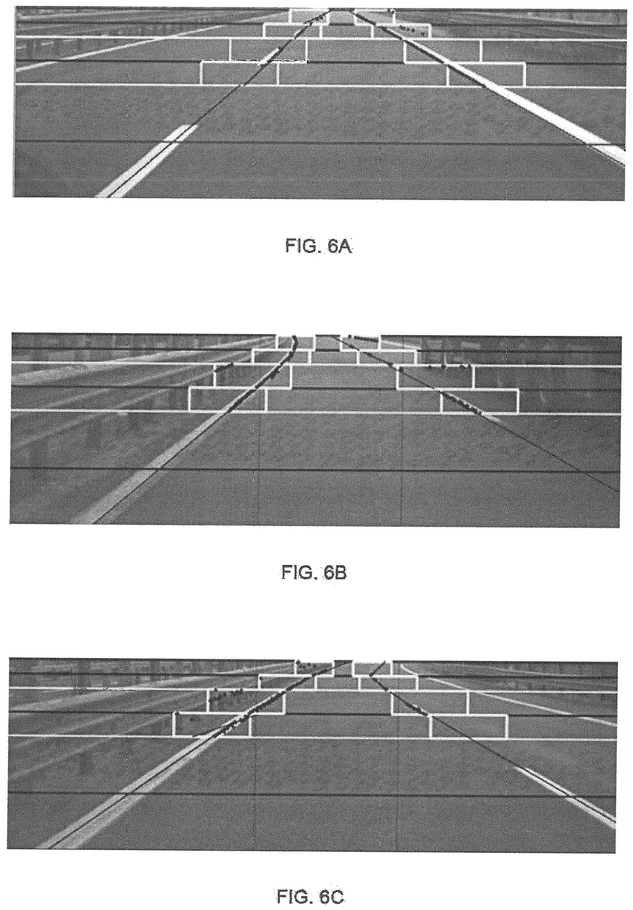

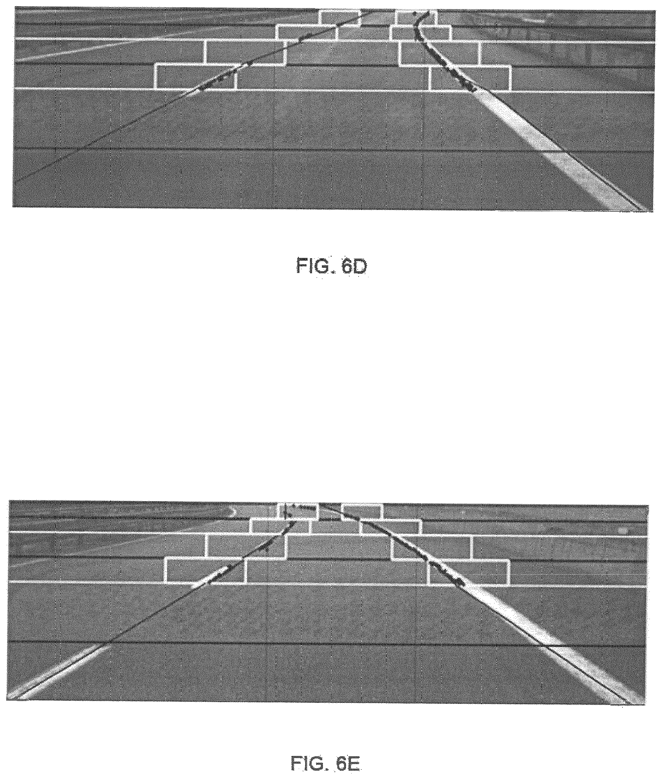

**Line fitting using OSLD:** A line is fitted to ridges of an individual segment using OSLD technique. FIG. 6A through 6E illustrate exemplary photographic representations of different road scenarios post implementation of segment creation, ridges accumulation and line fitting. Though the OSLD method is used in the present invention for line fitting, a person skilled in the art can use any other suitable line fitting techniques, including, but not limited to, least squares method, random sample consensus (RANSAC), Hough transform, etc. to for fitting the line to corresponding ridges of the segment.

**Segment Validation:** In order to avoid sudden variations in lines fitted in adjoining segments, a slope-based validation technique is implemented. For the ease of defining thresholds, the validation technique involves checking for angular deviation between previous and present line segments, instead of using difference between slope values of the previous and present line segments. Hence, the validation technique involves calculating an angle in degrees, at which each of the segment lines are oriented. The maximum allowed deviation between the orientations of lines in adjoining segments is regulated using a threshold. The applied thresholds may ensure that the allowed angular deviation for the RoIs corresponding to the far region is more relaxed in comparison to that of RoIs corresponding to the near region. If the angular difference is in a specified range and both the lines being compared lie in the same quadrant then the line segment fitted in the current RoI is considered to be valid.

In an implementation, with an exception for the line obtained in the bottommost segment, violation of defined angular threshold leads to the obtained segment line being rejected and replaced by a line having a slope same as that obtained in the segment below it. In other words, the validated line segment obtained in each of the RoIs, serves as a reference line for the RoI above it. The reference line is extended into the next RoI if the need arises as mentioned above. The probable lane lines obtained from the linear lane model is considered as the reference line for the bottommost segment.

**Segment connectivity:** The line fitted to the ridges in each segment may not ensure connectivity between adjoining line segments. Line segment connectivity is ensured by joining the foot point of a line segment to the top point of the line segment below it. The slope value of the line segment, whose foot point is modified, is also updated accordingly. However, to avoid getting drastic variation in the slope value while ensuring segment connectivity, the segment validation step is repeated at this point.

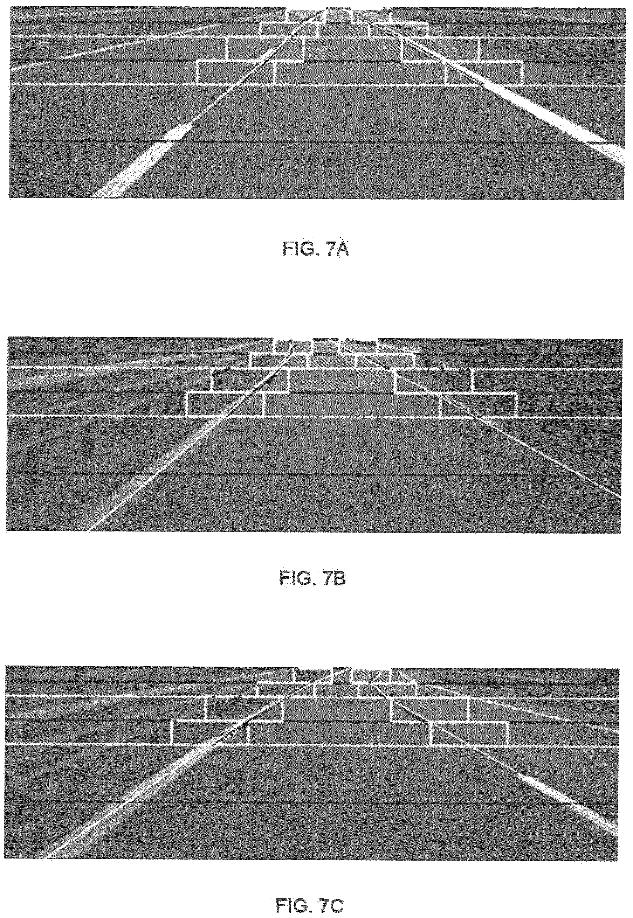

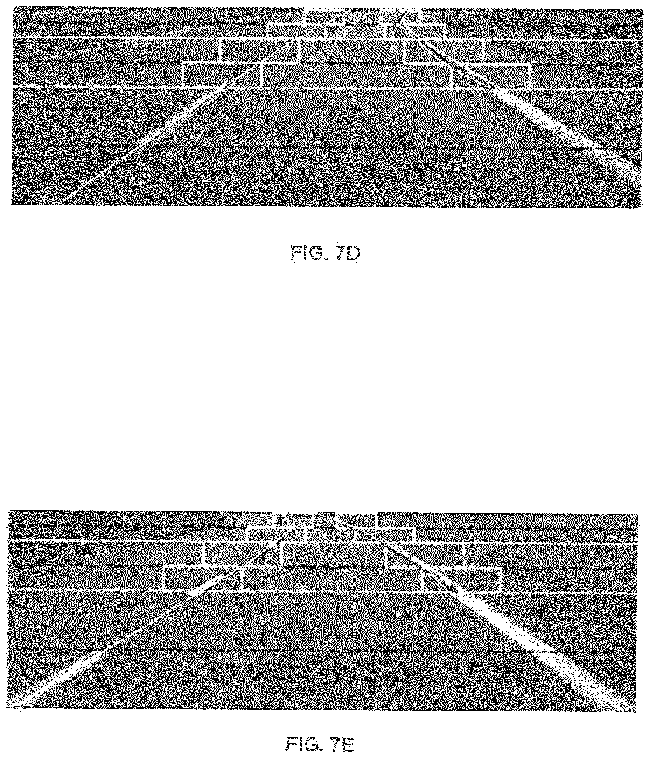

**Distance based line validation:** The method is used to validate the left and right segment line points based on real world distance between them. The real world coordinate points are generated from the corresponding segment line points. This technique is applied to all the segmented RoI regions. The real world distance between corresponding left and right segment line points is calculated. The average real world distance of last frames is considered to validate the current points. If the distance for a particular segment point is more or less than the average distance obtained, the segment line point values are modified with those obtained in the previous frame. This is used to eliminate sudden/spurious change in the lane segment points. FIGs. 7A through 7E illustrate exemplary photographic representations of different road scenarios post implementation of segment validation, segment connectivity, and distance based line validation.

**Bezier Curve Fitting:** The left and right curve points are calculated using a Bezier curve equation. A Bezier curve is defined by a set of control points $P_0$ to $P_n$, where n is the order of the curve. The first and last control points are always the end points of the curve. Bezier Curve may be generated with a number of control points. In this case six control points are considered, which correspond to the segment lines obtained for the left and right sides of the lane.

The equation is based on the binomial formula:

$$B(t) = \sum_{i=0}^{n} \binom{n}{i} (1-t)^{n-i} t^i P_i$$

where n and i are binomial coefficients.

We can consider six points, hence n=6 and i=0 to 5.

$$B(t) = (1 - t)^5 P_0 + 5t(1 - t)^4 P_1 + P_2(1 - t)^3 10\, t^2 + 10\, t^3(1 - t)^2 P_3 +$$
$$5t^4(1 - t)P_4 + t^5 P_5$$

where $0 < t < 1$

As t varies from 0 to 1, corresponding curve points are generated from the above equation.

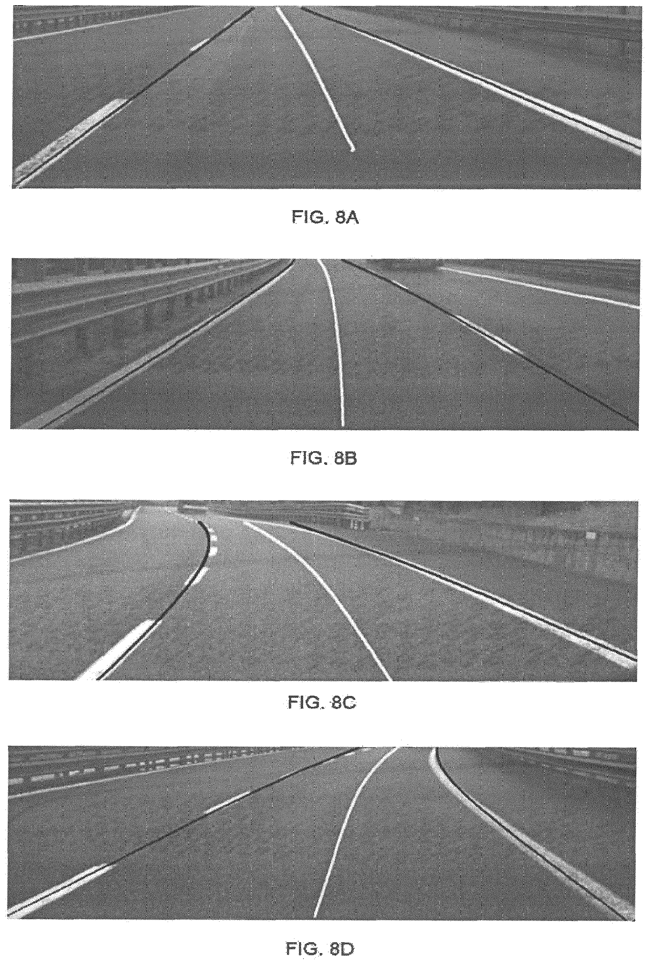

FIGs. 8A through 8D illustrate exemplary photographic representations of road scenario post implementation of Bezier curve fitting using ridge features for a straight road, a slight curve road, a left sharp curve road and a right sharp curve road respectively. It would be appreciated that although a Bezier curve fitting method is used for curve fitting, a person skilled in the art can use any other curve fitting technique, such as, but not limited to, polynomial curve fitting, B-spline curve fitting, clothoid curve fitting, and the like curve fitting techniques.

In an implementation, the extracted ridge features based potential lane is used to mask the RoI to extract relevant edges. With the curve output obtained from the ridges, a consistent and stable detection in far region is not possible. This is due to limited number of ridge feature points obtained in the far region. Also the curve output obtained from ridges may take into consideration some erroneous or unwanted ridges (like those obtained on a passing vehicle), thereby causing false detection of segment lines. The proposed lane detection method using ridge features is complemented with edge features using Canny edges. Canny edge detection helps in getting good amount of feature points in the mid and far region as well, so as to have a consistent detection with minimal fluctuations. However, the amount of unwanted feature points i.e. edges on nearby vehicles or nearby lanes, railings, etc. is also increased with the Canny edge detection technique. These extra edges need to be eliminated in order to reduce processing time of the proposed detection technique. A mask is used to eliminate any feature points lying outside the mask. As static masks are not able to detect sharp curves, dynamic masks are used for selecting the most appropriate feature points and eliminate unwanted feature points. In an implementation, the curve output generated using ridges is used as a base for mask creation with pre-defined buffer region on both left and right side. This fixed buffer region is different for mid and far region. This helps in eliminating the unwanted edge features, thus, speeding up the system and providing for selection of the best feature points for further processing.

In an embodiment, at least one dynamic mask image is created based on the curve output generated using ridge features with the pre-defined buffer region on left and right side of curve. Logical AND operation is performed between the mask image and the Canny edge image obtained during pre-processing of the received plurality of images. This process is used to remove unwanted feature points in the Canny edge image. The useful edge feature point coordinates are saved along with the number of edge feature points for further use.

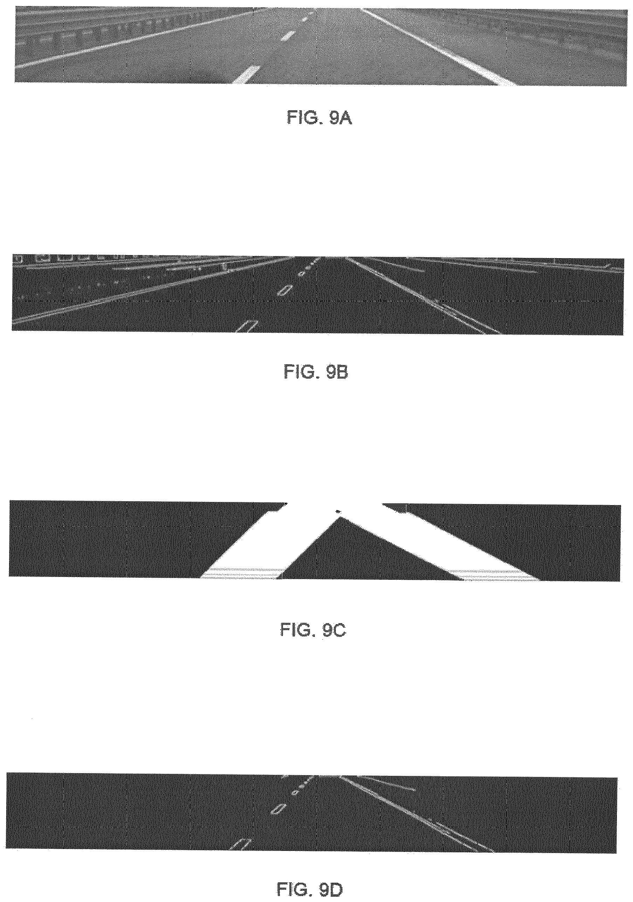

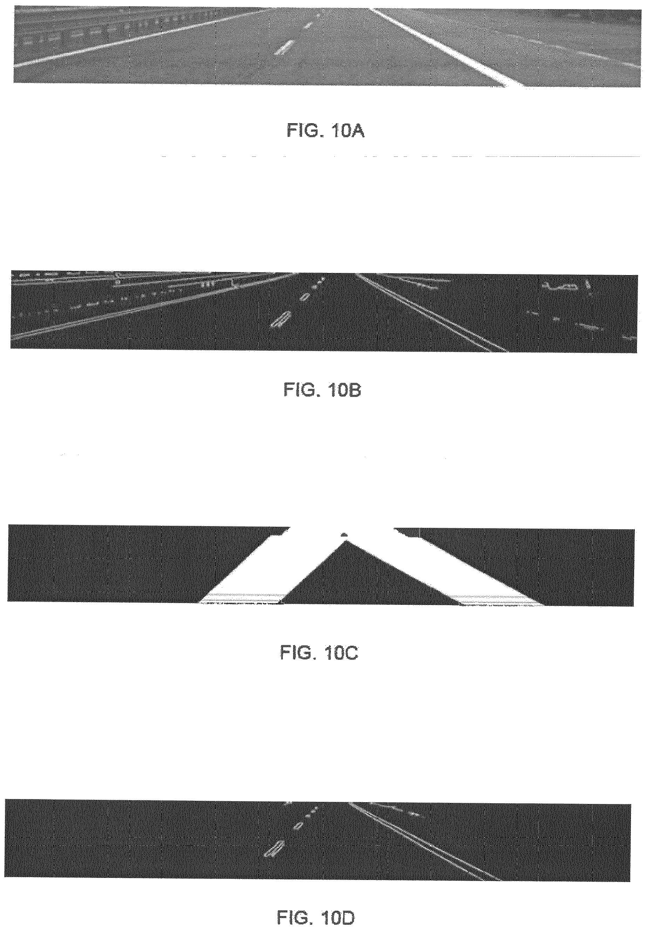

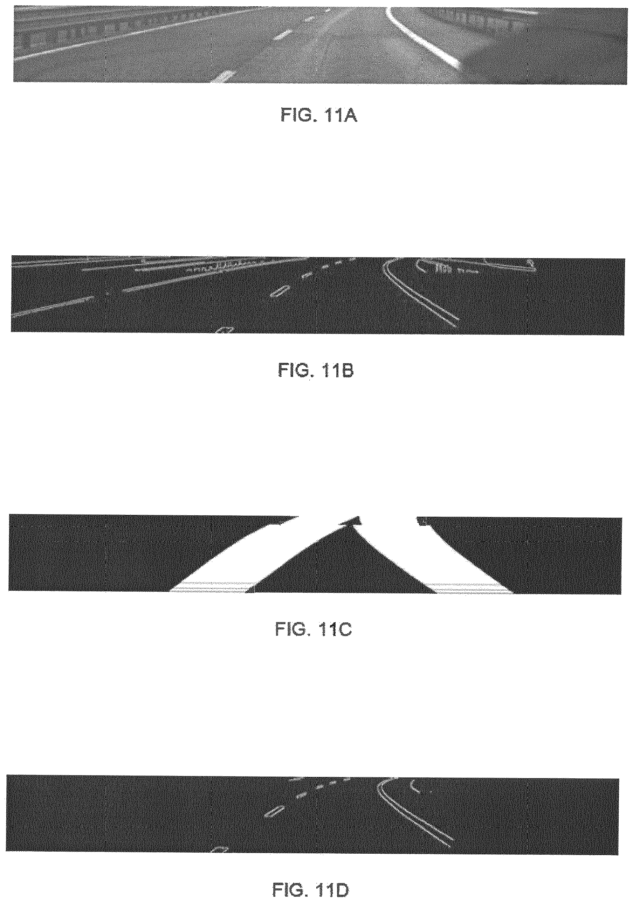

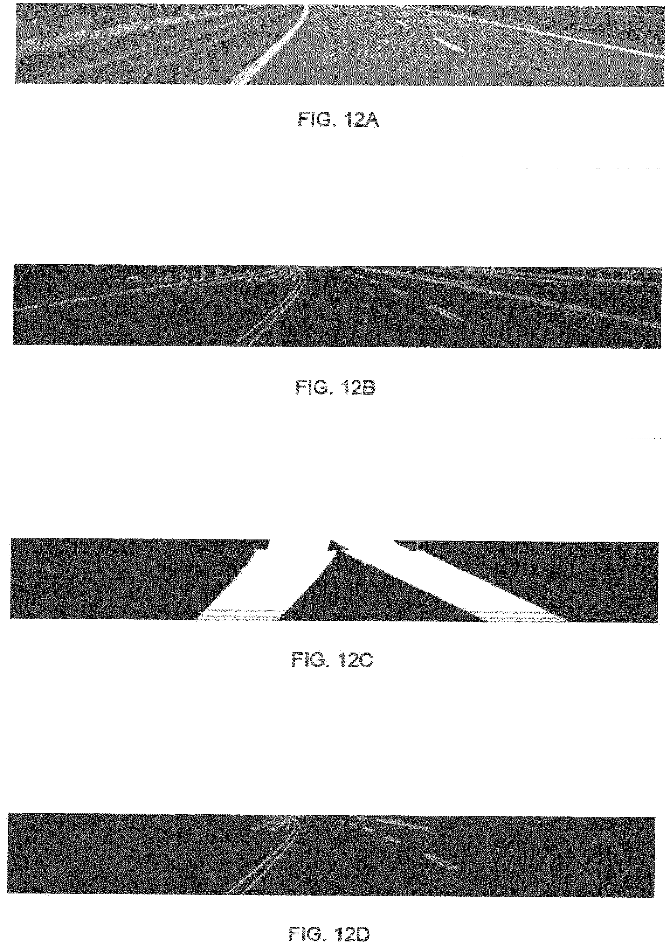

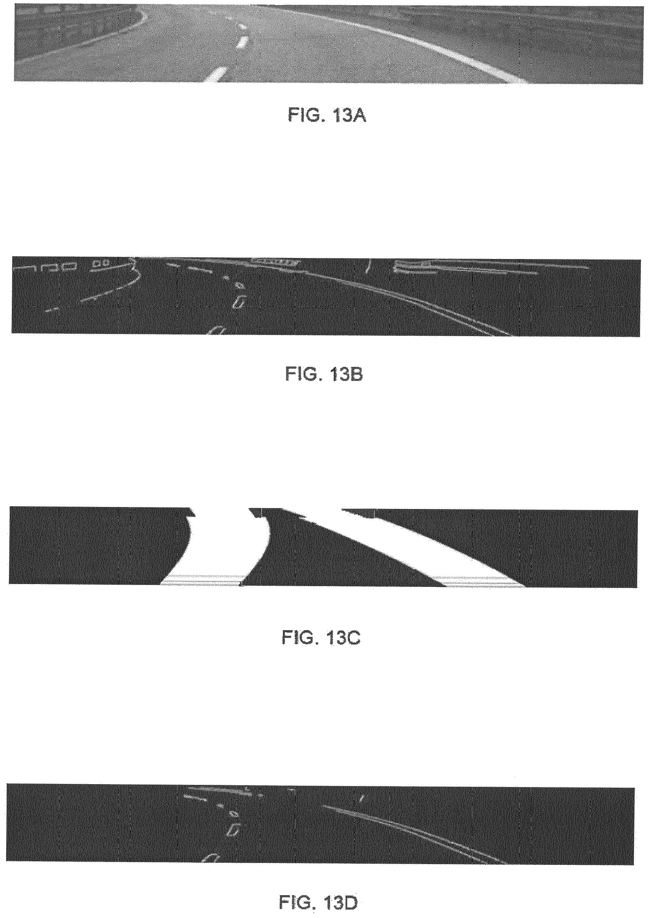

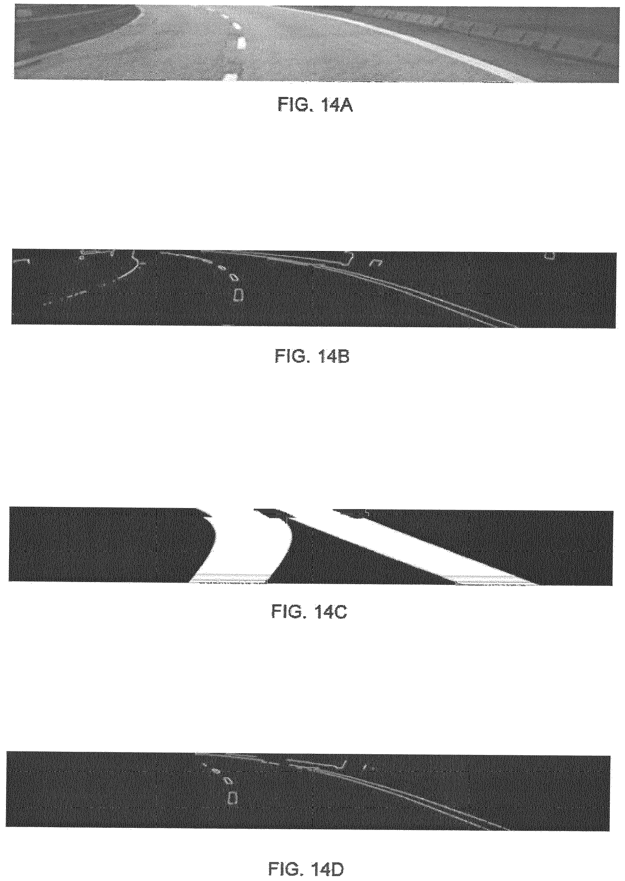

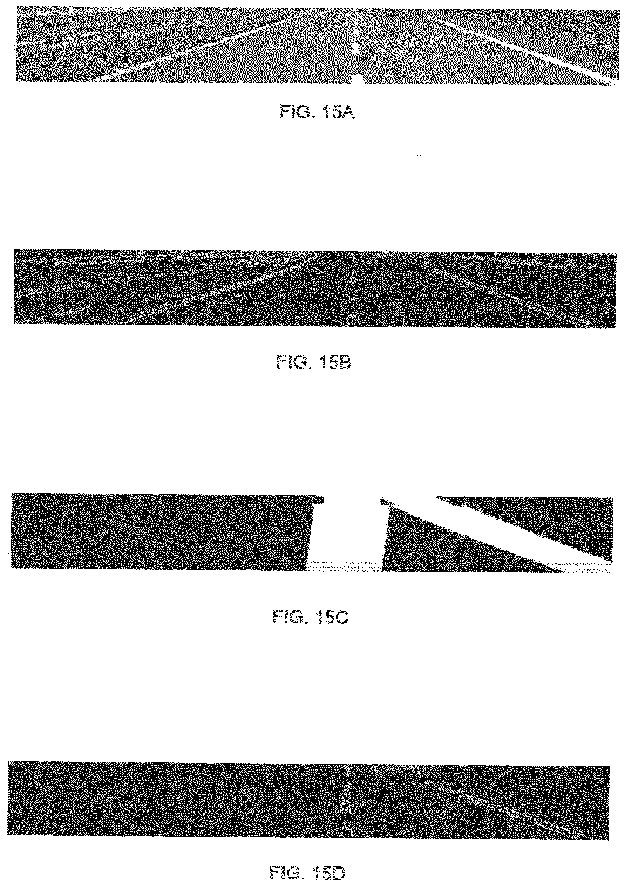

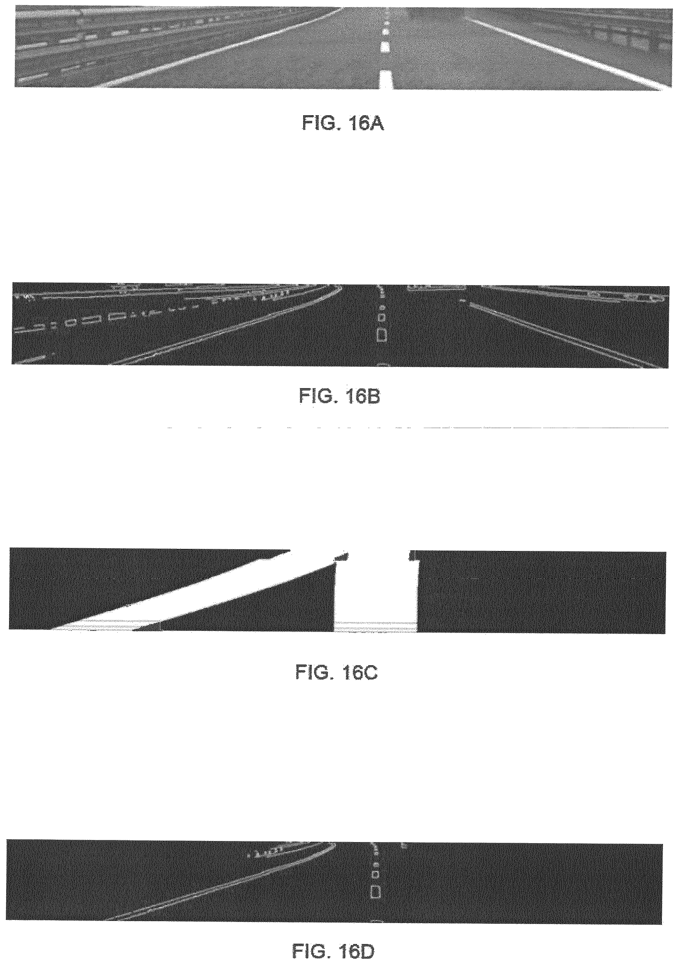

FIGs. 9A through 9D illustrate exemplary photographic representations of an input image, a Canny edge image, a dynamic mask image and a selected edge image respectively illustrating extraction of feature points using dynamic mask creation for a first normal road scenario in accordance to an embodiment of the present disclosure. FIGs. 10A through 10D illustrate exemplary photographic representations of an input image, a Canny edge image, a dynamic mask image and a selected edge image respectively illustrating extraction of feature points using dynamic mask creation for a second normal road scenario in accordance to an embodiment of the present disclosure. FIGs. 11A through 11D illustrate exemplary photographic representations of an input image, a Canny edge image, a dynamic mask image and a selected edge image respectively illustrating extraction of feature points using dynamic mask creation for a slight right curved road scenario in accordance to an embodiment of the present disclosure. FIGs. 12A through 12D illustrate exemplary photographic representations of an input image, a Canny edge image, a dynamic mask image and a selected edge image respectively illustrating extraction of feature points using dynamic mask creation for a slight left curved road scenario in accordance to an embodiment of the present disclosure. FIGs. 13A through 13D illustrate exemplary photographic representations of an input image, a Canny edge image, a dynamic mask image and a selected edge image respectively illustrating extraction of feature points using dynamic mask creation for a first sharp left curved road scenario in accordance to an embodiment of the present disclosure. FIGs. 14A through 14D illustrate exemplary photographic representations of an input image, a Canny edge image, a dynamic mask image and a selected edge image respectively illustrating extraction of feature points using dynamic mask creation for a second sharp left curved road scenario in accordance to an embodiment of the present disclosure. FIGs. 15A through 15D illustrate exemplary photographic representations of an input image, a Canny edge image, a dynamic mask image and a selected edge image respectively illustrating extraction of feature points using dynamic mask creation for a first lane change scenario in accordance to an embodiment of the present disclosure. FIGs. 16A through 16D illustrate exemplary photographic representations of an input image, a Canny edge image, a dynamic mask image and a selected edge image respectively illustrating extraction of feature points using dynamic mask creation for a second lane change scenario in accordance to an embodiment of the present disclosure.

According to an embodiment of the present invention, the proposed piecewise lane detection technique uses both ridges as well as edges features for detection of curved as well as straight sections of the lane. In an implementation, the Bezier curve obtained post extraction of ridge features is further used as an input image to extract relevant edges. The extracted edges after applying dynamic masking are further used to detect the final lane.

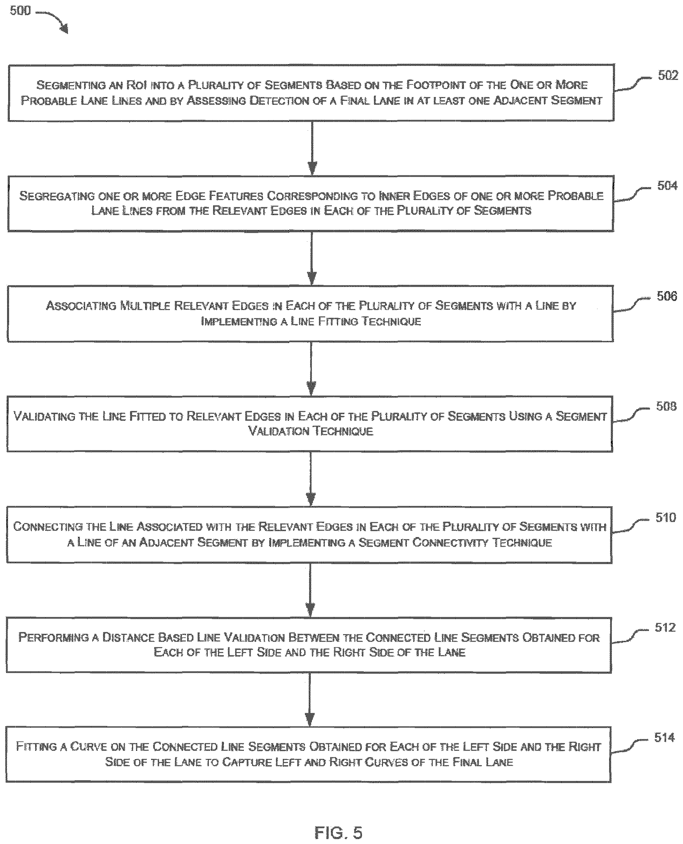

FIG. 5 illustrates an exemplary flowchart representation of a method for detection of a final lane in accordance to an embodiment of the present disclosure. In an embodiment, the final lane is detected using extracted relevant edges. In an embodiment, the method 500 for detection of the final lane comprises a step 502 for segmentation of the RoI into a plurality of segments based on the footpoint of the one or more probable lane lines and by assessing detection of the final lane in at least one adjacent segment, a step 504 for segregating the one or more edge features corresponding to inner edges of the one or more probable lane lines from the relevant edges in each of the plurality of segments, a step 506 for associating multiple relevant edges in each of the plurality of segments with a line by implementing a line fitting technique, a step 508 for validating the line fitted to the multiple relevant edges in each of the plurality of segments using a segment validation technique, a step 510 for connecting the line associated with/fitted to the multiple relevant edges in each of the plurality of segments with a line of an adjacent segment by implementing a segment connectivity technique, a step 512 for performing a distance based line validation between the connected line segments obtained for each of the left side and the right side of the lane, and a step 514 for fitting a curve on the connected line segments obtained for each of the left side and the right side of the lane to capture left and right curves of the final lane.

In an embodiment, the steps 502 to 514 of the method 500 for detection of the final lane may be implemented as:

**Segment creation:** The lane to be detected is divided into a plurality of segments, for instance, five segments. In an exemplary implementation, two segments are dedicated to detect the lane in the far region, and three segments are dedicated to detect the lane in the near and mid regions. The lane detection using edge features employs dynamic RoI selection for defining segments to better adapt to sharp curves. A confidence measure for each segment line is obtained by calculating the number of edge feature points lying on that line. This confidence measure when compared to a standard threshold that is defined as a percentage of segment height, acts as an additional validation step for the line obtained in each segment. A valid segment line in the near-most segment may not span the entire near region. Hence, in order to better estimate the confidence of the line visible only partially in the near-most segment, height of the near-most segment is kept adaptive instead of a fixed size to match the portion where the lane is visible.

**Dynamic RoI selection:** According to an embodiment of the present invention, in case of curve lane detection using ridge features, a segment is created by taking top-point of the line in the segment below as origin. A segment of the RoI is defined by taking some fixed offset, for instance, approximately 100 pixels on each side, from the origin so obtained. In case of lane detection using edge features, the selection of a segment of the RoI is made adaptive. The segment of the RoI is defined by finding the orientation of the line in the segment below and then using it to decide expanse of the RoI for the segment above it. If the angle of the line segment below lies in a first quadrant of the Cartesian coordinate system, then the RoI for the segment above it is shifted more towards the right with respect to the top point of the below segment line (also referred to as origin hereinafter). If the said angle lies in the second quadrant, then the RoI for the segment above it is shifted more towards the left side with respect to the origin. The standard process, i.e., equidistant expanse of the RoI in the left and right direction from the origin is followed, if the below segment line is oriented at an angle close to right angles.

**Copying/Accumulation of inner edges:** The edges obtained post applying dynamic RoI selection are further refined before employing the edges for line fitting in each segment. Due to the finite width of lane markings, two set of edges are obtained for each marking - one corresponding to the inner edges and the other corresponding to the outer edges. As lane detection is aimed at detecting the inner edges of the lane reliably, hence the outer edges can be conveniently eliminated. This enables to fit a line to the inner edge points of the lane.

**Line fitting using OSLD technique:** A line is fitted to these edges associated with an individual segment using the OSLD method. The OSLD method ensures that the line containing highest number of edge points and having slope value within a predefined slope limit is taken as the detected line.

**Segment Validation:** Apart from the segment validation strategy mentioned for ridge based curve output, the edge based curve output involves few more steps. A confidence measure for each segment line is obtained by calculating the number of edge feature points lying on that line. This confidence measure when compared to a standard threshold, which is defined as a percentage of segment height, acts as an additional validation step for the line obtained in each segment. In absence of edge features, for instance, due to occlusion, or in case of invalid line-fit, for instance, due to clutter, the previous frame line segment data is employed to maintain detection. In the case where the previous frame line segment data is not available e.g., during lane change, the invalid line segment in the current RoI is replaced with a line having a slope same as that obtained in the segment below it, the slope of which has already been validated.

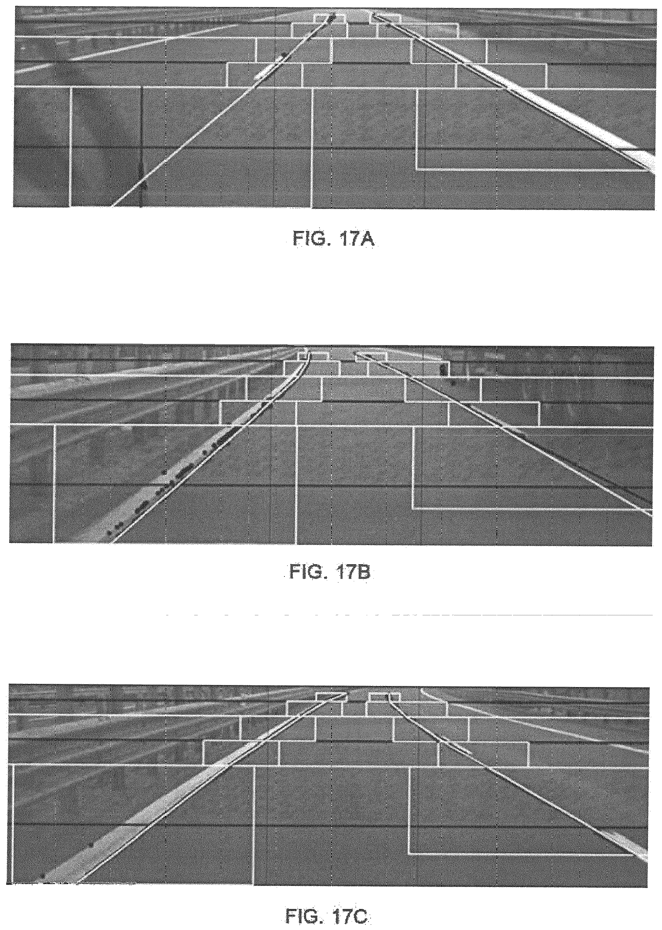

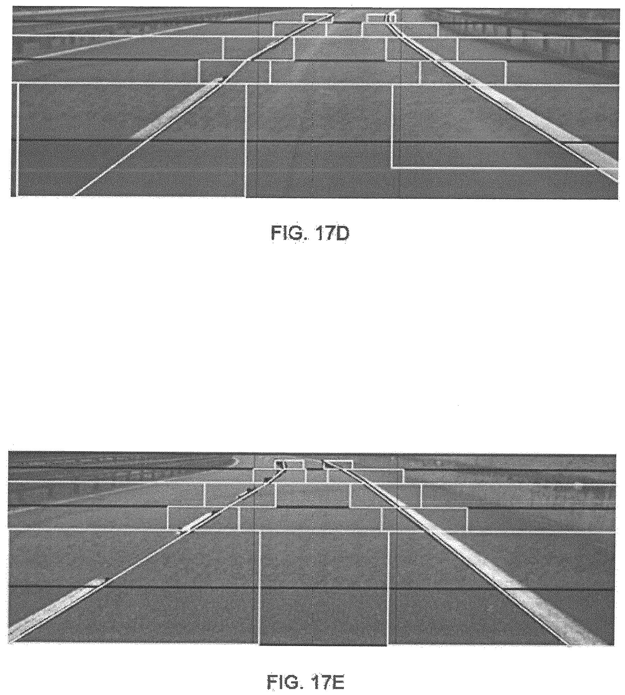

For the base segment, the orientation of the line fitted to the edge points is validated by comparing it with that of the linear lane model. Violation of the angular threshold in this case warrants replacement of the current slope value with that of slope of the reference line. As the linear lane model serves as a reference line for the bottommost RoI, an invalid line in this segment leads to extending the linear lane model line up to the bottommost RoI. Successive absence of edge features due to saturation in the image, persistent occlusion, poor image contrast etc. in a particular segment indicate poor visibility. Such cases, where the detection may become unreliable, are handled by reducing the range of the detection and by providing an appropriate low confidence alert to the driver. Thus, the output curve is plot using only the details of the line segment up to which a good confidence score (edge feature count) is obtained. FIGs. 17A thorough 17E illustrate exemplary photographic representations of a road scenario post implementation of segment creation, dynamic RoI selection, copying of inner edges, line fitting using OSLD, segment validation and segment connectivity respectively.

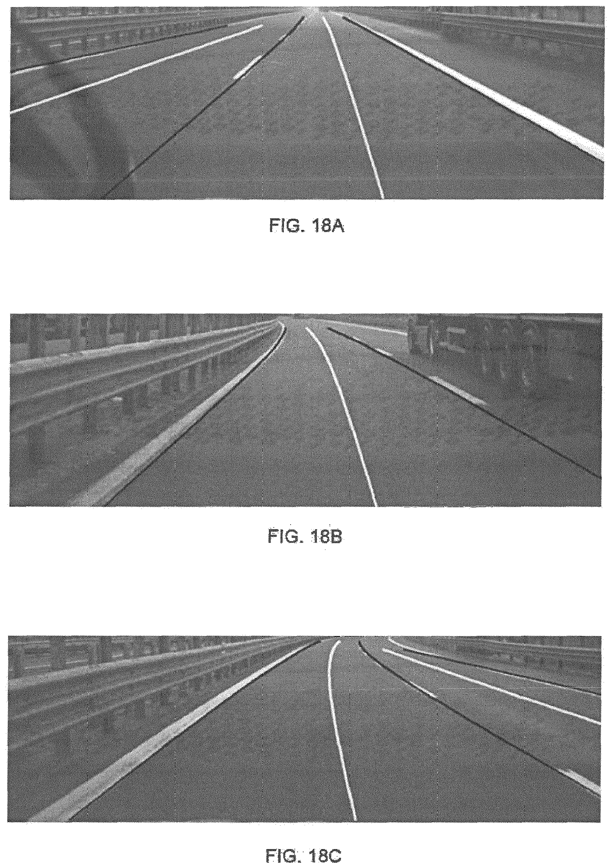

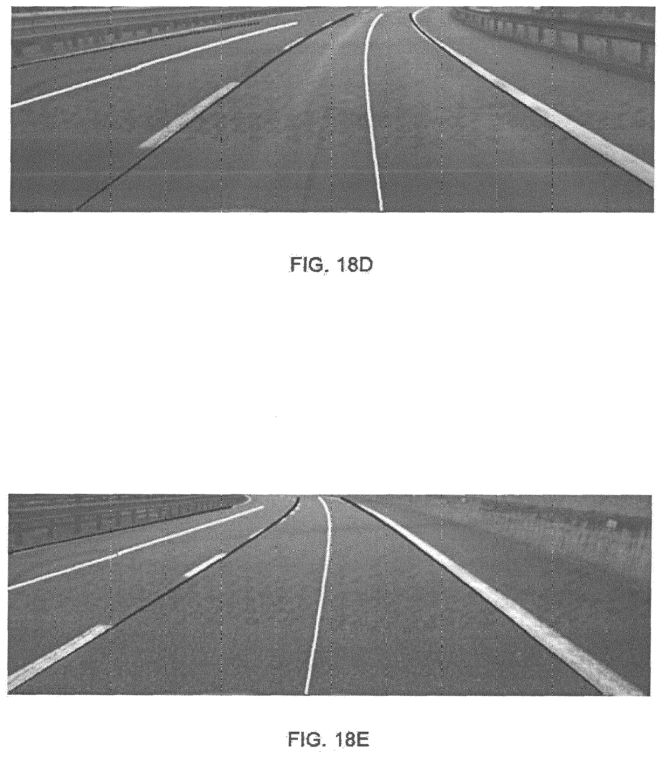

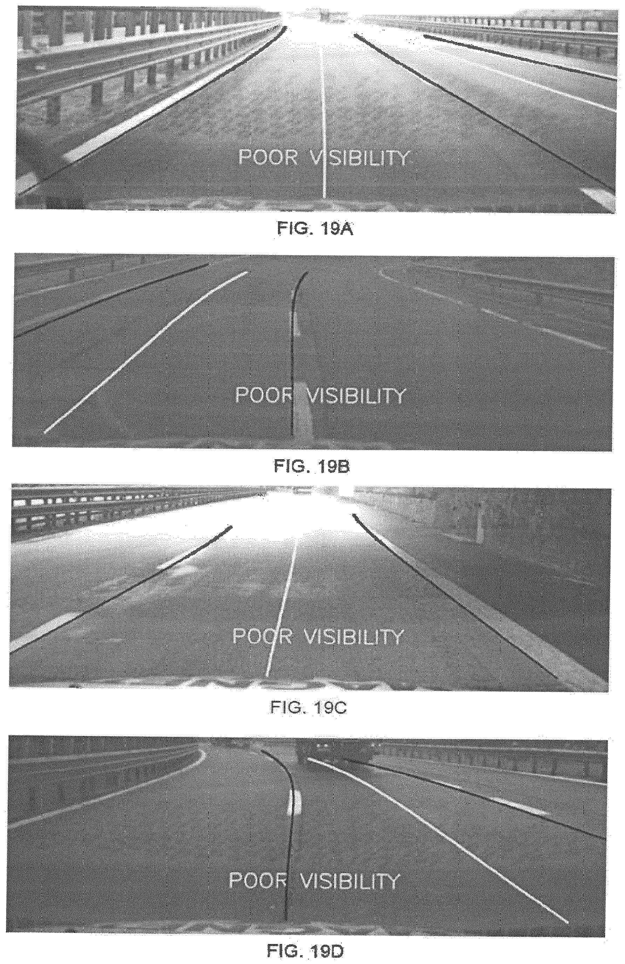

**Bezier Curve Fitting:** According to an embodiment of the present invention, curve detection using ridges is followed by distance based line validation and Bezier curve fitting. Similarly, curve detection using edges is also followed by distance based line validation and Bezier curve fitting to generate the final output. FIGs. 18A through 18E illustrate exemplary photographic representations of different road scenarios post implementation of Bezier curve fitting using edge features for straight road, slight left curve road, slight right curve road, sharp right curve road and sharp left curve road respectively. FIGs. 19A through 19D illustrate exemplary photographic representations of different road scenarios post implementation of Bezier curve fitting using edge features in case of poor visibility in accordance to an embodiment of the present disclosure.

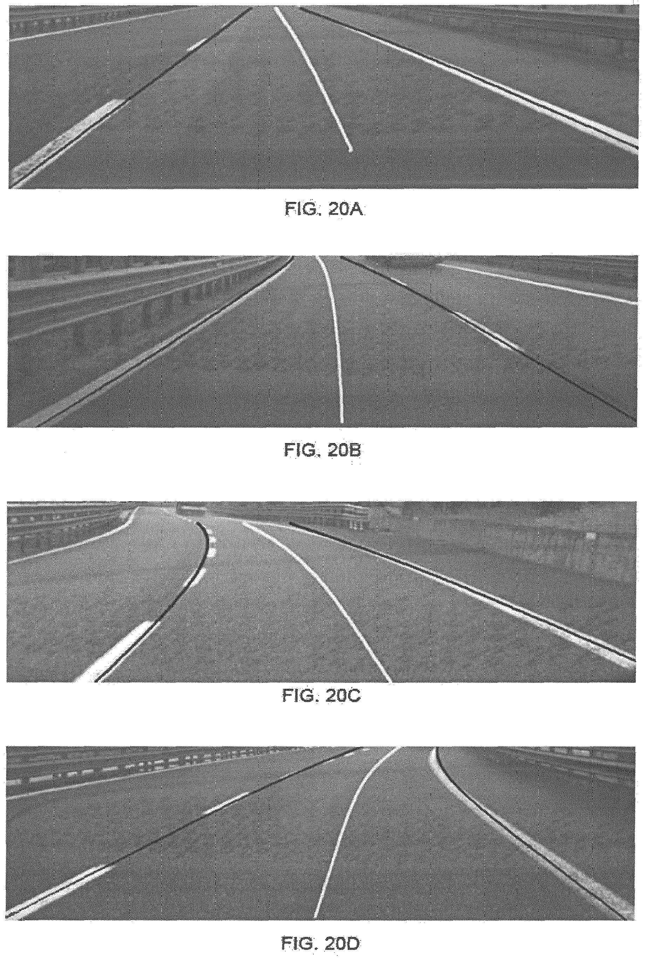

FIGs. 20A through 20D illustrate exemplary photographic representations of final detected lane for a straight road, a slight curved road, a left sharp curve and a right sharp curve respectively in accordance to an embodiment of the present disclosure. According to an embodiment of the present invention, the final lane detection module detects the final lane based on the relevant edges and may further identify if the vehicle is deviating from the detected final lane and can provide a warning to the driver, accordingly. The warning may be a visual warning, an audio warning, a vibrational warning, or any combination or any other type of warning as known in the art.

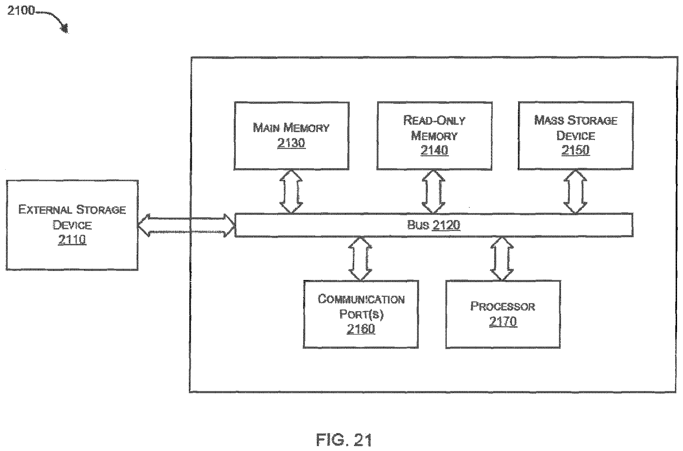

FIG. 21 illustrates an exemplary computer system in which or with which embodiments of the present invention can be utilized in accordance with embodiments of the present disclosure. As shown in FIG. 21, computer system includes an external storage device 2110, a bus 2120, a main memory 2130, a read only memory 2140, a mass storage device 2150, communication port 2160, and a processor 2170. A person skilled in the art will appreciate that computer system may include more than one processor and communication ports. Examples of processor 2170 include, but are not limited to, an Intel® Itanium® or Itanium 2 processor(s), or AMD® Opteron® or Athlon MP® processor(s), Motorola® lines of processors, FortiSOC™ system on a chip processors or other future processors. Processor 2170 may include various modules associated with embodiments of the present invention. Communication port 2160 can be any of an RS-232 port for use with a modem based dialup connection, a 10/100 Ethernet port, a Gigabit or 10 Gigabit port using copper or fiber, a serial port, a parallel port, or other existing or future ports. Communication port 2160 may be chosen depending on a network, such a Local Area Network (LAN), Wide Area Network (WAN), or any network to which computer system connects.

Memory 2130 can be Random Access Memory (RAM), or any other dynamic storage device commonly known in the art. Read only memory 2140 can be any static storage device(s) e.g., but not limited to, a Programmable Read Only Memory (PROM) chips for storing static information e.g., start-up or BIOS instructions for processor 2170. Mass storage 2150 may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces), e.g. those available from Seagate (e.g., the Seagate Barracuda 7102 family) or Hitachi (e.g., the Hitachi Deskstar 7K1000), one or more optical discs, Redundant Array of Independent Disks (RAID) storage, e.g. an array of disks (e.g., SATA arrays), available from various vendors including Dot Hill Systems Corp., LaCie, Nexsan Technologies, Inc. and Enhance Technology, Inc.

Bus 2120 communicatively couples processor(s) 2170 with the other memory, storage and communication blocks. Bus 2120 can be, e.g. a Peripheral Component Interconnect (PCI) / PCI Extended (PCI-X) bus, Small Computer System Interface (SCSI), USB or the like, for connecting expansion cards, drives and other subsystems as well as other buses, such a front side bus (FSB), which connects processor 2170 to software system.

Optionally, operator and administrative interfaces, e.g. a display, keyboard, and a cursor control device, may also be coupled to bus 2120 to support direct operator interaction with computer system. Other operator and administrative interfaces can be provided through network connections connected through communication port 2160. External storage device 2110 can be any kind of external hard-drives, floppy drives, IOMEGA® Zip Drives, Compact Disc - Read Only Memory (CD-ROM), Compact Disc - Re-Writable (CD-RW), Digital Video Disk - Read Only Memory (DVD-ROM). Components described above are meant only to exemplify various possibilities. In no way should the aforementioned exemplary computer system limit the scope of the present disclosure.

Although the present disclosure is described with respect to lane detection system, one skilled in the art would envision that the present invention for lane detection can also be used in various other automotive as well as non-automotive applications such as but not limited to parking slot detection, detecting different makings on the road like pedestrian crossing, arrow markings, road traffic lane markings, reading various line graphs etc.

Thus, the proposed system and method of the present disclosure provide for a reliable, accurate and consistent lane detection both for straight and curved road scenarios. Additionally, the proposed system and method do not use computationally intensive techniques like perspective transform, Hough Transform, machine learning approach, etc. The present invention uses a low cost camera based solution for lane detection purposes. In comparison to other detection techniques, the distance based line validation improves lane detection by eliminating sudden changes in the lane segments.

While the foregoing describes various embodiments of the invention, other and further embodiments of the invention may be devised without departing from the basic scope thereof. The scope of the invention is determined by the claims that follow. The invention is not limited to the described embodiments, versions or examples, which are included to enable a person having ordinary skill in the art to make and use the invention when combined with information and knowledge available to the person having ordinary skill in the art.

## ADVANTAGES OF THE INVENTION

The present disclosure provides a system and method for detection of a lane.

The present disclosure provides a system and method to warn a driver of a vehicle in case the vehicle deviates from the detected lane.

The present disclosure provides a system and method for lane detection that detects the lane for straight roads as well as curved roads.

The present disclosure provides a system and method for lane detection that combines advantages of both ridge and edge based detection techniques.

The present disclosure provides a system and method for lane detection that reliably, accurately and consistently detects the lane.

The present disclosure provides a low cost solution for reliable lane detection.

## Claims

1. A method for lane detection comprising the steps of:

   receiving, at a computing device, a plurality of images captured by an image capturing device;
   pre-processing, at the computing device, the received plurality of images to obtain a Region of Interest (RoI) in said plurality of images, and obtain one or more edge features over said RoI;
   extracting, at the computing device, one or more ridge features based on processing of said RoI;
   detecting, at the computing device, an indication of a footpoint of one or more probable lane lines based on the extracted ridge features of said RoI;
   detecting, at the computing device, a potential lane based on the extracted ridge features and the footpoint of the one or more probable lane lines;
   applying, at the computing device, a mask on said one or more edge features so as to obtain relevant edges, said mask being based on said potential lane; and
   detecting, at the computing device, a final lane based on said extracted relevant edges and the footpoint of the one or more probable lane lines.

2. The method as claimed in claim 1, wherein the step of pre-processing of the plurality of images further comprises the steps of:

   grayscaling a first set of said plurality of images;
   obtaining said RoI based on said first set of grayscaled images;
   dividing said RoI into a near region, mid region, and far region;
   subjecting said RoI to Gaussian smoothing; and
   obtaining the one or more edge features over said RoI based on an edge detection technique.

3. The method as claimed in claim 1 or claim 2, wherein the step of detecting the footpoint indicative of position of the probable one or more lane lines further comprises the steps of:

   laterally splitting the RoI into at least three regions;

fitting a line to each of the extracted ridge features in a left region and a right region of the at least three regions of the RoI; and
validating the line in the left region and the right region of the RoI.

4. The method as claimed in any preceding claim, wherein the step of detecting the potential lane further comprises the step of capturing left and right curves of said potential lane.

5. The method as claimed in any preceding claim, wherein the step of detecting the potential lane further comprises the steps of:

segmenting the RoI into a plurality of segments based on the footpoint of the one or more probable lane lines and assessment of detection of the potential lane in at least one adjacent segment of the plurality of segments;
accumulating the extracted ridge features in each of the plurality of segments, by maintaining a log of said extracted ridge features in each of the plurality of segments;
associating multiple ridge features in each of the plurality of segments with a line by implementing a line fitting technique;
validating the line fitted to the multiple ridge features in each of the plurality of segments using a segment validation technique;
connecting the line associated with the multiple ridge features in each of the plurality of segments with a line of an adjacent segment by implementing a segment connectivity technique;
performing a distance based line validation between said connected line segments obtained for each of a left side and a right side of the lane; and
fitting a curve on said connected line segments obtained for each of the left side and the right side, so as to capture left and right curves of said potential lane.

6. The method as claimed in any preceding claim, wherein the potential lane is detected to generate a pre-defined buffer region on any or both of its left and right sides, and wherein the potential lane acts as the mask to extract the relevant edges of the said RoI.

7. The method as claimed in any preceding claim, wherein said mask is a dynamic mask and varies based on change in potential lane based on the multiple ridge features.

8. The method as claimed in any preceding claim, wherein the step of detecting the final lane based on the extracted relevant edges further comprises the steps of:

segmenting the RoI into a plurality of segments based on the footpoint of the one or more probable lane lines and by assessing detection of the final lane in at least one adjacent segment;
segregating the one or more edge features corresponding to inner edges of the one or more probable lane lines from the relevant edges in each of the plurality of segments;
associating multiple relevant edges in each of the plurality of segments with a line by implementing a line fitting technique;
validating the line fitted to relevant edges in each of the plurality of segments using a segment validation technique;
connecting the line associated with the relevant edges in each of the plurality of segments with a line of an adjacent segment by implementing a segment connectivity technique;
performing a distance based line validation between said connected line segments obtained for each of the left side and the right side of the lane; and
fitting a curve on said connected line segments obtained for each of the left side and the right side of the lane, so as to capture left and right curves of said final lane.

9. The method as claimed in any preceding claim, wherein the method further comprises the step of providing any or a combination of an indication and at least one parameter of said final detected lane to a user.

10. A system for lane detection comprising:

a storage device having embodied therein one or more routines operable to detect a final lane; and
one or more processors coupled to the storage device, wherein the one or more routines comprise:

an image pre-processing module, which when executed by the one or more processors, receives a plurality of images captured by an image capturing device, and pre-processes the received plurality of images to obtain a Region of Interest (RoI) in said plurality of images and further obtain one or more edge features over said RoI;

a ridge feature extraction module, which when executed by the one or more processors, extracts one or more ridge features based on processing of said RoI;

a potential lane detection module, which when executed by the one or more processors, detects an indication of a footpoint of one or more probable lane lines based on the extracted ridge features of said RoI, and obtains a potential lane based on said extracted ridge features and the footpoint of the one or more probable lane lines;

a relevant edges retrieval module, which when executed by the one or more processors, applies a mask on said one or more edge features so as to obtain relevant edges, said mask being based on said potential lane; and

a final lane detection module, which when executed by the one or more processors, detects the final lane based on said extracted relevant edges and the footpoint of the one or more probable lane lines.

11. The system as claimed in claim 10, wherein the image pre-processing module is further configured to:

grayscale a first set of said plurality of images;
obtain said RoI based on said first set of grayscaled images;
divide said RoI into a near region, mid region, and far region;
subject said RoI to Gaussian smoothing; and
obtain the one or more edge features over said RoI based on an edge detection technique.

12. The system as claimed in claim 10 or claim 11, wherein the potential lane detection module is configured to:

laterally split the RoI into at least three regions;
fit a line to each of the extracted ridge features in a left region and a right region of the at least three regions of the RoI; and
validate the line in the left region and the right region of the RoI.

13. The system as claimed in any of claims 10 to 12, wherein the potential lane detection module is configured to:

segment the RoI into a plurality of segments based on the footpoint of the one or more probable lane lines and assessment of detection of the potential lane in at least one adjacent segment;
accumulate the extracted ridge features in each of the plurality of segments, by maintaining a log of said extracted ridge features in each of the plurality of segments;
associate multiple ridge features in each of the plurality of segments with a line by implementing a line fitting technique;
validate the line fitted to the multiple ridge features in each of the plurality of segments using a segment validation technique;
connect the line associated with the multiple ridge features in each of the plurality of segments with a line of an adjacent segment by implementing a segment connectivity technique;
perform a distance based line validation between said connected line segments obtained for each of a left side and a right side of the lane; and
fit a curve on said connected line segments obtained for each of the left side and the right side, so as to capture left and right curves of said potential lane.

14. The system as claimed in any of claims 10 to 13, wherein the potential lane is detected to generate a pre-defined buffer region on any or both of its left and right sides, and wherein the potential lane acts as the mask to extract the relevant edges of the RoI.

15. The system as claimed in any of claims 10 to 14, wherein the final lane detection module is configured to:

segment the RoI into a plurality of segments based on the footpoint of the one or more probable lane lines and by assessing detection of the final lane in at least one adjacent segment;
segregate the one or more edge features corresponding to inner edges of the one or more probable lane lines from the relevant edges in each of the plurality of segments;

associate multiple relevant edges in each of the plurality of segments with a line by implementing a line fitting technique;

validate the line fitted to relevant edges in each of the plurality of segments using a segment validation technique;

connect the line associated with the relevant edges in each of the plurality of segments with a line of an adjacent segment by implementing a segment connectivity technique;

perform a distance based line validation between said connected line segments obtained for each of the left side and the right side of the lane; and

fit a curve on said connected line segments obtained for each of the left side and the right side of the lane, so as to capture left and right curves of said final lane.

SYSTEM
102

NETWORK
106

COMPUTING DEVICE 1
104-1

COMPUTING DEVICE 2
104-2

· · · COMPUTING DEVICE N
104-N

FIG. 1

SYSTEM
102

PROCESSOR(S)
202

MEMORY
204

INTERFACE(S)
206

MODULES
208

IMAGE PRE-PROCESSING MODULE
212

RIDGE FEATURE EXTRACTION
MODULE
214

POTENTIAL LANE DETECTION
MODULE
216

RELEVANT EDGES RETRIEVAL
MODULE
218

FINAL LANE DETECTION MODULE
220

OTHER MODULE(S)
222

DATA
210

FIG. 2

300

302

RECEIVING A PLURALITY OF IMAGES CAPTURED BY AN IMAGE CAPTURING DEVICE

304

PRE-PROCESSING THE RECEIVED PLURALITY OF IMAGES TO OBTAIN A REGION OF INTEREST (ROI) IN THE PLURALITY OF IMAGES, AND OBTAIN ONE OR MORE EDGE FEATURES OVER THE ROI

306

EXTRACTING ONE OR MORE RIDGE FEATURES BASED ON PROCESSING OF THE ROI

308

DETECTING AN INDICATION OF A FOOTPOINT OF ONE OR MORE PROBABLE LANE LINES BASED ON THE EXTRACTED RIDGE FEATURES

310

DETECTING A POTENTIAL LANE BASED ON THE EXTRACTED RIDGE FEATURES AND THE FOOTPOINT OF THE ONE OR MORE PROBABLE LANE LINES

312

APPLYING A MASK ON THE ONE OR MORE EDGE FEATURES TO OBTAIN RELEVANT EDGES

314

DETECTING A FINAL LANE BASED ON THE EXTRACTED RELEVANT EDGES AND THE FOOTPOINT OF THE ONE OR MORE PROBABLE LANE LINES

FIG. 3

400

SEGMENTING AN ROI INTO A PLURALITY OF SEGMENTS BASED ON FOOTPOINT OF ONE OR MORE PROBABLE LANE LINES AND ASSESSMENT OF DETECTION OF A POTENTIAL LANE IN AT LEAST ONE ADJACENT SEGMENT OF THE PLURALITY OF SEGMENTS — 402

ACCUMULATING THE EXTRACTED RIDGE FEATURES IN EACH OF THE PLURALITY OF SEGMENTS BY MAINTAINING A LOG OF THE EXTRACTED RIDGE FEATURES IN EACH OF THE PLURALITY OF SEGMENTS — 404

ASSOCIATING MULTIPLE RIDGE FEATURES IN EACH OF THE PLURALITY OF SEGMENTS WITH A LINE BY IMPLEMENTING A LINE FITTING TECHNIQUE — 406

VALIDATING THE LINE FITTED TO THE MULTIPLE RIDGE FEATURES IN EACH OF THE PLURALITY OF SEGMENTS USING A SEGMENT VALIDATION TECHNIQUE — 408

CONNECTING THE LINE ASSOCIATED WITH THE MULTIPLE RIDGE FEATURES IN EACH OF THE PLURALITY OF SEGMENTS WITH A LINE OF AN ADJACENT SEGMENT BY IMPLEMENTING A SEGMENT CONNECTIVITY TECHNIQUE — 410

PERFORMING A DISTANCE BASED LINE VALIDATION BETWEEN THE CONNECTED LINE SEGMENTS OBTAINED FOR EACH OF A LEFT SIDE AND A RIGHT SIDE OF THE LANE — 412

FITTING A CURVE ON THE CONNECTED LINE SEGMENTS OBTAINED FOR EACH OF THE LEFT SIDE AND THE RIGHT SIDE TO CAPTURE LEFT AND RIGHT CURVES OF THE POTENTIAL LANE — 414

FIG. 4

500

SEGMENTING AN RoI INTO A PLURALITY OF SEGMENTS BASED ON THE FOOTPOINT OF THE ONE OR MORE PROBABLE LANE LINES AND BY ASSESSING DETECTION OF A FINAL LANE IN AT LEAST ONE ADJACENT SEGMENT — 502

SEGREGATING ONE OR MORE EDGE FEATURES CORRESPONDING TO INNER EDGES OF ONE OR MORE PROBABLE LANE LINES FROM THE RELEVANT EDGES IN EACH OF THE PLURALITY OF SEGMENTS — 504

ASSOCIATING MULTIPLE RELEVANT EDGES IN EACH OF THE PLURALITY OF SEGMENTS WITH A LINE BY IMPLEMENTING A LINE FITTING TECHNIQUE — 506

VALIDATING THE LINE FITTED TO RELEVANT EDGES IN EACH OF THE PLURALITY OF SEGMENTS USING A SEGMENT VALIDATION TECHNIQUE — 508

CONNECTING THE LINE ASSOCIATED WITH THE RELEVANT EDGES IN EACH OF THE PLURALITY OF SEGMENTS WITH A LINE OF AN ADJACENT SEGMENT BY IMPLEMENTING A SEGMENT CONNECTIVITY TECHNIQUE — 510

PERFORMING A DISTANCE BASED LINE VALIDATION BETWEEN THE CONNECTED LINE SEGMENTS OBTAINED FOR EACH OF THE LEFT SIDE AND THE RIGHT SIDE OF THE LANE — 512

FITTING A CURVE ON THE CONNECTED LINE SEGMENTS OBTAINED FOR EACH OF THE LEFT SIDE AND THE RIGHT SIDE OF THE LANE TO CAPTURE LEFT AND RIGHT CURVES OF THE FINAL LANE — 514

FIG. 5

FIG. 6A

FIG. 6B

FIG. 6C

FIG. 6D

FIG. 6E

FIG. 7A

FIG. 7B

FIG. 7C

FIG. 7D

FIG. 7E

FIG. 8A

FIG. 8B

FIG. 8C

FIG. 8D

FIG. 9A

FIG. 9B

FIG. 9C

FIG. 9D

FIG. 10A

FIG. 10B

FIG. 10C

FIG. 10D

FIG. 11A

FIG. 11B

FIG. 11C

FIG. 11D

FIG. 12A

FIG. 12B

FIG. 12C

FIG. 12D

FIG. 13A

FIG. 13B

FIG. 13C

FIG. 13D

FIG. 14A

FIG. 14B

FIG. 14C

FIG. 14D

FIG. 15A

FIG. 15B

FIG. 15C

FIG. 15D

FIG. 16A

FIG. 16B

FIG. 16C

FIG. 16D

FIG. 17A

FIG. 17B

FIG. 17C

FIG. 17D

FIG. 17E

FIG. 18A

FIG. 18B

FIG. 18C

FIG. 18D

FIG. 18E

FIG. 19A

FIG. 19B

FIG. 19C

FIG. 19D

44

FIG. 20A

FIG. 20B

FIG. 20C

FIG. 20D

2100

MAIN MEMORY
2130

READ-ONLY
MEMORY
2140

MASS STORAGE
DEVICE
2150

EXTERNAL STORAGE
DEVICE
2110

BUS 2120

COMMUNICATION
PORT(S)
2160

PROCESSOR
2170

FIG. 21

Europäisches
Patentamt

European
Patent Office

Office européen
des brevets

# EUROPEAN SEARCH REPORT

Application Number

EP 18 16 7695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/177951 A1 (YANG LEI [US] ET AL) 22 June 2017 (2017-06-22) * the whole document * | 1-15 | INV. G06K9/00 G06K9/32 G06K9/46 |
| A | DE 10 2006 007550 A1 (VOLKSWAGEN AG [DE]) 9 November 2006 (2006-11-09) * paragraphs [0007] - [0009], [0038] * * figure 2 * | 1-15 | ADD. G06T9/20 |
| A | A LOPEZ ET AL: "Robust lane markings detection and road geometry computation", INTERNATIONAL JOURNAL OF AUTOMOTIVE TECHNOLOGY, vol. 11, no. 3, June 2010 (2010-06), pages 395-407, XP55520857, DOI: 10.1007/s12239-010-0049-6 * abstract * | 1-15 | |
| A | DU XINXIN ET AL: "Vision-based lane line detection for autonomous vehicle navigation and guidance", 2015 10TH ASIAN CONTROL CONFERENCE (ASCC), IEEE, 31 May 2015 (2015-05-31), pages 1-5, XP033198079, DOI: 10.1109/ASCC.2015.7244831 [retrieved on 2015-09-08] * abstract * | 1-15 | TECHNICAL FIELDS SEARCHED (IPC) G06K G06T |
| A | CN 104 537 342 A (UNIV FUZHOU) 22 April 2015 (2015-04-22) * abstract * * figures 1-6 * | 1-15 | |

-/--

The present search report has been drawn up for all claims

| Place of search | Date of completion of the search | Examiner |
|---|---|---|
| The Hague | 5 November 2018 | Hermes, Lothar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 18 16 7695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | MARTIN AIGNER ET AL: "Robust Computation of Foot Points on Implicitly Defined Curves", MATHEMATICAL METHODS FOR CURVES AND SURFACES: TROMSØ 2004, 2005, XP055520824, * page 1 * | 1,10 | |
| L | YISONG CHEN ET AL: "Real-time tracking and pose-estimation of walking human from silhouette images", COMPUTATIONAL INTELLIGENCE FOR VISUAL INTELLIGENCE, 2009. CIVI '09. IEEE WORKSHOP ON, IEEE, PISCATAWAY, NJ, USA, 30 March 2009 (2009-03-30), pages 1-7, XP031456609, DOI: 10.1109/CIVI.2009.4938978 ISBN: 978-1-4244-2775-8 * figure 5 * | 1,10 | |
| | | | **TECHNICAL FIELDS SEARCHED (IPC)** |

The present search report has been drawn up for all claims

| Place of search | Date of completion of the search | Examiner |
|---|---|---|
| The Hague | 5 November 2018 | Hermes, Lothar |

EPO FORM 1503 03.82 (P04C01)

page 2 of 2

## ANNEX TO THE EUROPEAN SEARCH REPORT
## ON EUROPEAN PATENT APPLICATION NO.

EP 18 16 7695

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2018

| Patent document cited in search report | Publication date | Patent family member(s) | Publication date |
|---|---|---|---|
| US 2017177951 A1 | 22-06-2017 | CN 106909876 A<br>TW 201724049 A<br>US 2017177951 A1 | 30-06-2017<br>01-07-2017<br>22-06-2017 |
| DE 102006007550 A1 | 09-11-2006 | NONE | |
| CN 104537342 A | 22-04-2015 | NONE | |

EPO FORM P0459

For more details about this annex : see Official Journal of the European Patent Office, No. 12/82